# EUROPEAN PATENT APPLICATION

(11) **EP 4 608 059 A2**
(43) Date of publication of application: **27.08.2025**
(21) Application number: 25189421.8
(22) Date of filing: 03.01.2023
(51) Int. Cl.: H04W 76/23

(54) **SIDELINK MEASUREMENT GAP FOR POSITIONING**

(30) Priority: 01.03.2022 GR 20220100189
(62) Divisional of application: 23703530.8
(71) Applicant: QUALCOMM Incorporated, San Diego, CA 92121-1714 (US)
(72) Inventor: YERRAMALLI, Srinivas, San Diego, 92121-1714 (US); ZHANG, Xiaoxia, San Diego, 92121-1714 (US); GUPTA, Piyush, San Diego, 92121-1714 (US); MANOLAKOS, Alexandros, San Diego, 92121-1714 (US); KUMAR, Mukesh, San Diego, 92121-1714 (US)
(74) Representative: Reddie & Grose LLP

(57) **Abstract**

Disclosed are techniques for wireless positioning. In an aspect, a user equipment (UE) may determine a sidelink measurement gap for positioning (SL-MGP). The UE may perform sidelink positioning during the SL-MGP, wherein performing SL positioning comprises transmitting or receiving at least one sidelink positioning reference signal (SL-PRS). In another aspect, a network entity, such as a base station or a location server, may receive, from a UE, first information indicating SL-PRS processing capability of the UE. The network entity may determine a SL-MGP based at least in part on the first information. The network entity may send, to the UE, second information indicating the SL-MGP.

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)) and other technical enhancements.

Leveraging the increased data rates and decreased latency of 5G, among other things, vehicle-to-everything (V2X) communication technologies are being implemented to support autonomous driving applications, such as wireless communications between vehicles, between vehicles and the roadside infrastructure, between vehicles and pedestrians, etc.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of wireless positioning performed by a user equipment (UE) includes determining a sidelink measurement gap for positioning (SL-MGP); and performing sidelink positioning during the SL-MGP using at least one sidelink positioning reference signal (SL-PRS).

In an aspect, a method of wireless positioning performed by a network entity includes receiving, from a UE, first information indicating SL-PRS processing capability of the UE; determining a SL-MGP based at least in part on the first information; and sending, to the UE, second information indicating the SL-MGP.

In an aspect, a UE includes a memory; at least one transceiver; and at least one processor communicatively coupled to the memory and the at least one transceiver, the at least one processor configured to: determine a SL-MGP; and perform sidelink positioning during the SL-MGP using at least one SL-PRS.

In an aspect, a network entity includes a memory; at least one transceiver; and at least one processor communicatively coupled to the memory and the at least one transceiver, the at least one processor configured to: receive, from a UE via the at least one transceiver, first information indicating SL-PRS processing capability of the UE; determine a SL-MGP based at least in part on the first information; and send, to the UE via the at least one transceiver, second information indicating the SL-MGP.

In an aspect, a UE includes means for determining a SL-MGP; and means for performing sidelink positioning during the SL-MGP using at least one SL-PRS.

In an aspect, a network entity includes means for receiving, from a UE, first information indicating SL-PRS processing capability of the UE; means for determining a SL-MGP based at least in part on the first information; and means for sending, to the UE, second information indicating the SL-MGP.

In an aspect, a non-transitory computer-readable medium storing computer-executable instructions that, when executed by a UE, cause the UE to: determine a SL-MGP; and perform sidelink positioning during the SL-MGP using at least one SL-PRS.

In an aspect, a non-transitory computer-readable medium storing computer-executable instructions that, when executed by a network entity, cause the network entity to: receive, from a UE, first information indicating SL-PRS processing capability of the UE; determine a SL-MGP based at least in part on the first information; and send, to the UE, second information indicating the SL-MGP.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 is a diagram illustrating an example frame structure, according to aspects of the disclosure.
FIG. 5 is a diagram of an example positioning reference signal (PRS) configuration for the PRS transmissions of a given base station, according to aspects of the disclosure.
FIG. 6A is a diagram illustrating how the parameters of a measurement gap configuration specify a pattern of measurement gaps, according to aspects of the disclosure.
FIG. 6B is a diagram illustrating positioning reference signals (PRSs) within a PRS occasion within a measurement gap, according to aspects of the disclosure.
FIG. 7 illustrates an example of a wireless communications system that supports unicast sidelink establishment, according to aspects of the disclosure.
FIG. 8 is a diagram illustrating an example sidelink ranging and positioning procedure, according to aspects of the disclosure.
FIG. 9 is a diagram illustrating an example resource pool for positioning within a sidelink resource pool, according to aspects of the disclosure.
FIG. 10 is a time-frequency diagram illustrating example SL-MGPs as well as resource pools for communication and resource pools for positioning, according to aspects of the disclosure.
FIG. 11A through FIG. 11C are time frequency diagrams showing example SL-MGPs with different durations, according to aspects of the disclosure.
FIG. 12 is a flowchart of an example process, performed by a UE, associated with sidelink measurement and processing gaps for positioning, according to aspects of the disclosure.
FIG. 13 is a flowchart of an example process 1300 associated with sidelink measurement and processing gaps for positioning, according to aspects of the disclosure.

### DETAILED DESCRIPTION

Techniques to define and manage SL-MGPs to measure SL-PRS signals, including techniques by which a UE can advertise its capability to process the same, are herein presented.

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE), "vehicle UE" (V-UE), "pedestrian UE" (P-UE), and "base station" are not intended to be specific or otherwise limited to any particular radio access technology (RAT), unless otherwise noted. In general, a UE may be any wireless communication device (e.g., vehicle on-board computer, vehicle navigation device, mobile phone, router, tablet computer, laptop computer, asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as a "mobile device," an "access terminal" or "AT," a "client device," a "wireless device," a "subscriber device," a "subscriber terminal," a "subscriber station," a "user terminal" or UT, a "mobile terminal," a "mobile station," or variations thereof.

A V-UE is a type of UE and may be any in-vehicle wireless communication device, such as a navigation system, a warning system, a heads-up display (HUD), an on-board computer, an in-vehicle infotainment system, an automated driving system (ADS), an advanced driver assistance system (ADAS), etc. Alternatively, a V-UE may be a portable wireless communication device (e.g., a cell phone, tablet computer, etc.) that is carried by the driver of the vehicle or a passenger in the vehicle. The term "V-UE" may refer to the in-vehicle wireless communication device or the vehicle itself, depending on the context. A P-UE is a type of UE and may be a portable wireless communication device that is carried by a pedestrian (i.e., a user that is not driving or riding in a vehicle). Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on Institute of Electrical and Electronics Engineers (IEEE) 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs including supporting data, voice and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference RF signals to UEs to be measured by the UEs and/or may receive and measure signals transmitted by the UEs. Such base stations may be referred to as positioning beacons (e.g., when transmitting RF signals to UEs) and/or as location measurement units (e.g., when receiving and measuring RF signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

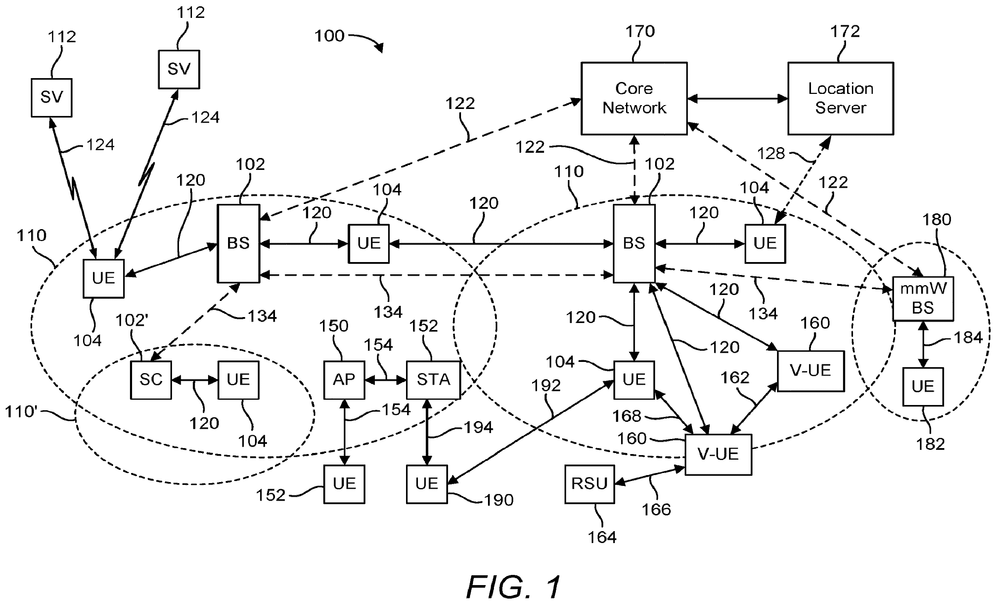

FIG. 1 illustrates an example wireless communications system 100, according to aspects of the disclosure. The wireless communications system 100 (which may also be referred to as a wireless wide area network (WWAN)) may include various base stations 102 (labelled "BS") and various UEs 104. The base stations 102 may include macro cell base stations (high power cellular base stations) and/or small cell base stations (low power cellular base stations). In an aspect, the macro cell base stations 102 may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labelled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen-before-talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a mmW base station 180 that may operate in millimeter wave (mmW) frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

Leveraging the increased data rates and decreased latency of NR, among other things, vehicle-to-everything (V2X) communication technologies are being implemented to support intelligent transportation systems (ITS) applications, such as wireless communications between vehicles (vehicle-to-vehicle (V2V)), between vehicles and the roadside infrastructure (vehicle-to-infrastructure (V2I)), and between vehicles and pedestrians (vehicle-to-pedestrian (V2P)). The goal is for vehicles to be able to sense the environment around them and communicate that information to other vehicles, infrastructure, and personal mobile devices. Such vehicle communication will enable safety, mobility, and environmental advancements that current technologies are unable to provide. Once fully implemented, the technology is expected to reduce unimpaired vehicle crashes by 80%.

Still referring to FIG. 1, the wireless communications system 100 may include multiple V-UEs 160 that may communicate with base stations 102 over communication links 120 using the Uu interface (i.e., the air interface between a UE and a base station). V-UEs 160 may also communicate directly with each other over a wireless sidelink 162, with a roadside unit (RSU) 164 (a roadside access point) over a wireless sidelink 166, or with sidelink-capable UEs 104 over a wireless sidelink 168 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, V2V communication, V2X communication (e.g., cellular V2X (cV2X) communication, enhanced V2X (eV2X) communication, etc.), emergency rescue applications, etc. One or more of a group of V-UEs 160 utilizing sidelink communications may be within the geographic coverage area 110 of a base station 102. Other V-UEs 160 in such a group may be outside the geographic coverage area 110 of a base station 102 or be otherwise unable to receive transmissions from a base station 102. In some cases, groups of V-UEs 160 communicating via sidelink communications may utilize a one-to-many (1:M) system in which each V-UE 160 transmits to every other V-UE 160 in the group. In some cases, a base station 102 facilitates the scheduling of resources for sidelink communications. In other cases, sidelink communications are carried out between V-UEs 160 without the involvement of a base station 102.

In an aspect, the sidelinks 162, 166, 168 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs.

In an aspect, the sidelinks 162, 166, 168 may be cV2X links. A first generation of cV2X has been standardized in LTE, and the next generation is expected to be defined in NR. cV2X is a cellular technology that also enables device-to-device communications. In the U.S. and Europe, cV2X is expected to operate in the licensed ITS band in sub-6GHz. Other bands may be allocated in other countries. Thus, as a particular example, the medium of interest utilized by sidelinks 162, 166, 168 may correspond to at least a portion of the licensed ITS frequency band of sub-6GHz. However, the present disclosure is not limited to this frequency band or cellular technology.

In an aspect, the sidelinks 162, 166, 168 may be dedicated short-range communications (DSRC) links. DSRC is a one-way or two-way short-range to medium-range wireless communication protocol that uses the wireless access for vehicular environments (WAVE) protocol, also known as IEEE 802.11p, for V2V, V2I, and V2P communications. IEEE 802.11p is an approved amendment to the IEEE 802.11 standard and operates in the licensed ITS band of 5.9 GHz (5.85-5.925 GHz) in the U.S. In Europe, IEEE 802.11p operates in the ITS G5A band (5.875 - 5.905 MHz). Other bands may be allocated in other countries. The V2V communications briefly described above occur on the Safety Channel, which in the U.S. is typically a 10 MHz channel that is dedicated to the purpose of safety. The remainder of the DSRC band (the total bandwidth is 75 MHz) is intended for other services of interest to drivers, such as road rules, tolling, parking automation, etc. Thus, as a particular example, the mediums of interest utilized by sidelinks 162, 166, 168 may correspond to at least a portion of the licensed ITS frequency band of 5.9 GHz.

Alternatively, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Communications between the V-UEs 160 are referred to as V2V communications, communications between the V-UEs 160 and the one or more RSUs 164 are referred to as V2I communications, and communications between the V-UEs 160 and one or more UEs 104 (where the UEs 104 are P-UEs) are referred to as V2P communications. The V2V communications between V-UEs 160 may include, for example, information about the position, speed, acceleration, heading, and other vehicle data of the V-UEs 160. The V2I information received at a V-UE 160 from the one or more RSUs 164 may include, for example, road rules, parking automation information, etc. The V2P communications between a V-UE 160 and a UE 104 may include information about, for example, the position, speed, acceleration, and heading of the V-UE 160 and the position, speed (e.g., where the UE 104 is carried by a user on a bicycle), and heading of the UE 104.

Note that although FIG. 1 only illustrates two of the UEs as V-UEs (V-UEs 160), any of the illustrated UEs (e.g., UEs 104, 182, 190) may be V-UEs. In addition, while only the V-UEs 160 and a single UE 104 have been illustrated as being connected over a sidelink, any of the UEs illustrated in FIG. 1, whether V-UEs, P-UEs, etc., may be capable of sidelink communication. Further, although only UE 182 was described as being capable of beam forming, any of the illustrated UEs, including V-UEs 160, may be capable of beam forming. Where V-UEs 160 are capable of beam forming, they may beam form towards each other (i.e., towards other V-UEs 160), towards RSUs 164, towards other UEs (e.g., UEs 104, 152, 182, 190), etc. Thus, in some cases, V-UEs 160 may utilize beamforming over sidelinks 162, 166, and 168.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on. As another example, the D2D P2P links 192 and 194 may be sidelinks, as described above with reference to sidelinks 162, 166, and 168.

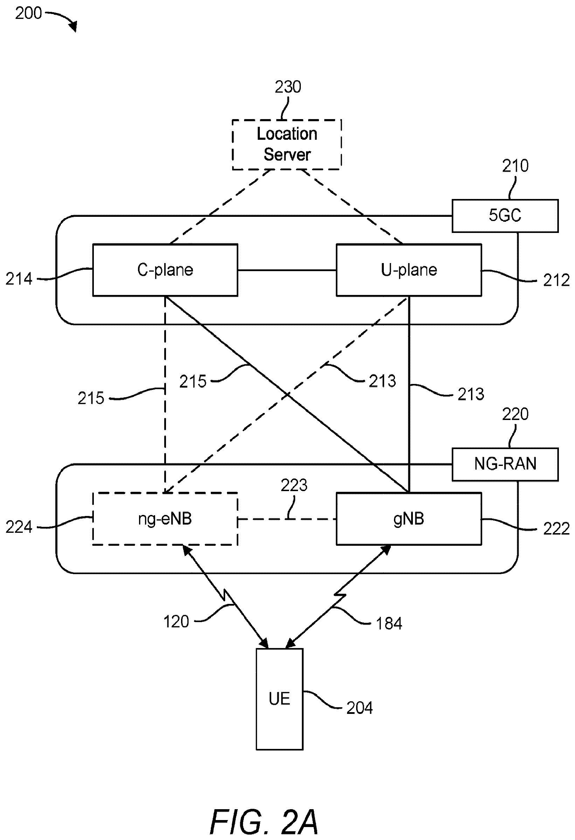

FIG. 2A illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

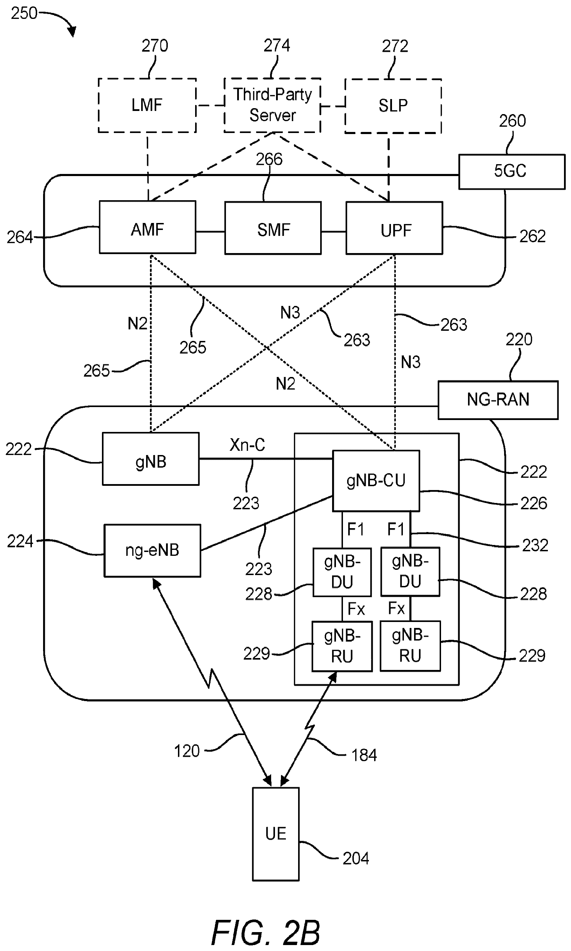

FIG. 2B illustrates another example wireless network structure 250. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally hosts the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

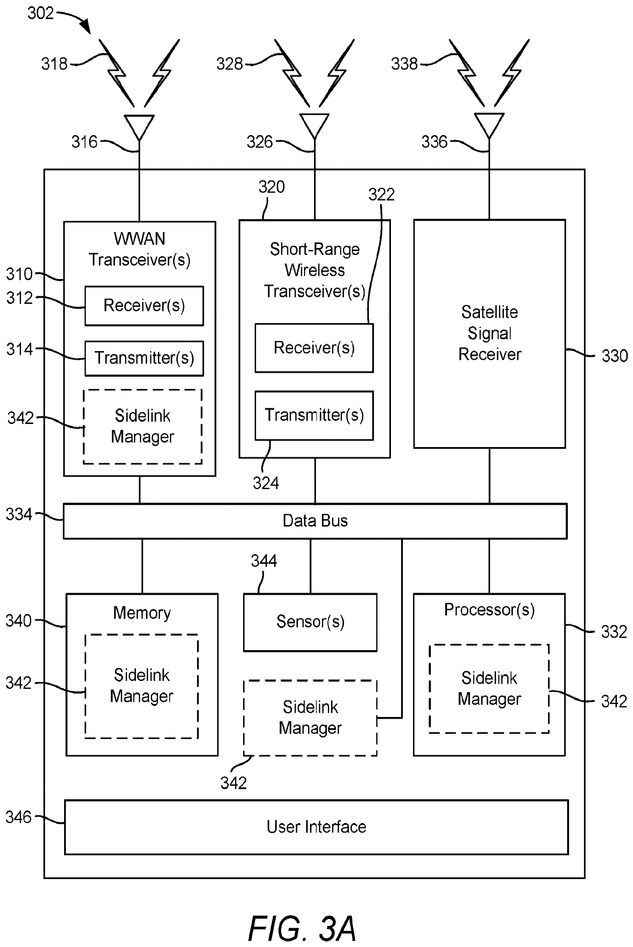

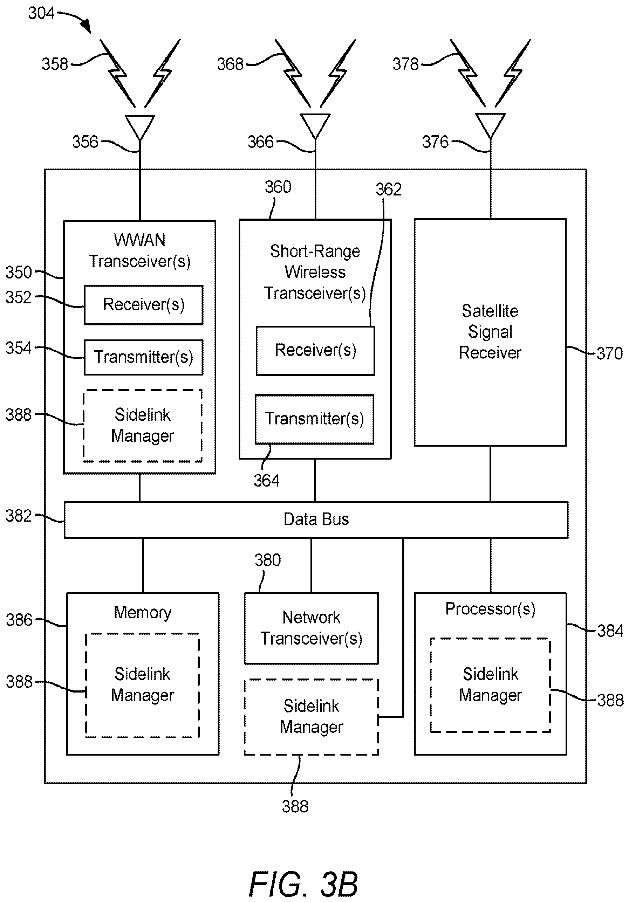

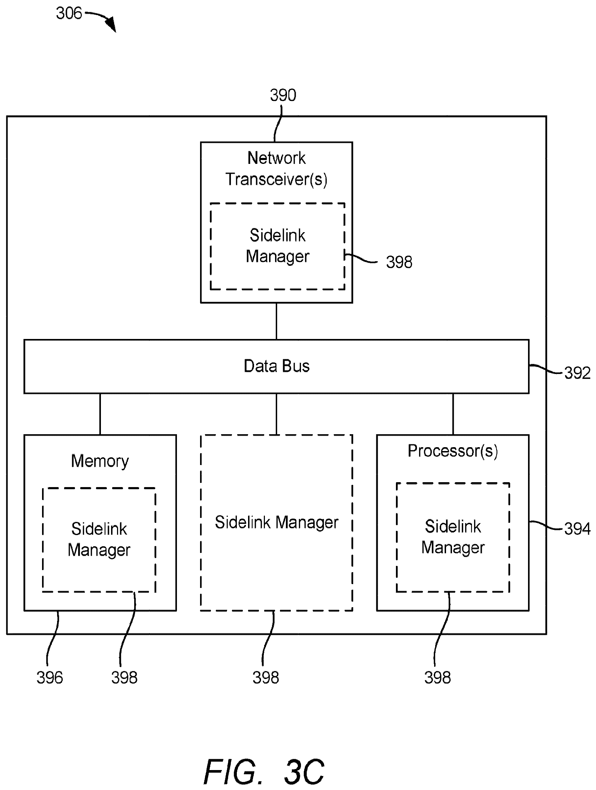

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the operations described herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include sidelink manager 342, 388, and 398, respectively. The sidelink manager 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the sidelink manager 342, 388, and 398 may be external to the processors 332, 384, and 394 (e.g., part of a modem processing system, integrated with another processing system, etc.). Alternatively, the sidelink manager 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the sidelink manager 342, which may be, for example, part of the one or more WWAN transceivers 310, the memory 340, the one or more processors 332, or any combination thereof, or may be a standalone component. FIG. 3B illustrates possible locations of the sidelink manager 388, which may be, for example, part of the one or more WWAN transceivers 350, the memory 386, the one or more processors 384, or any combination thereof, or may be a standalone component. FIG. 3C illustrates possible locations of the sidelink manager 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the sidelink manager 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

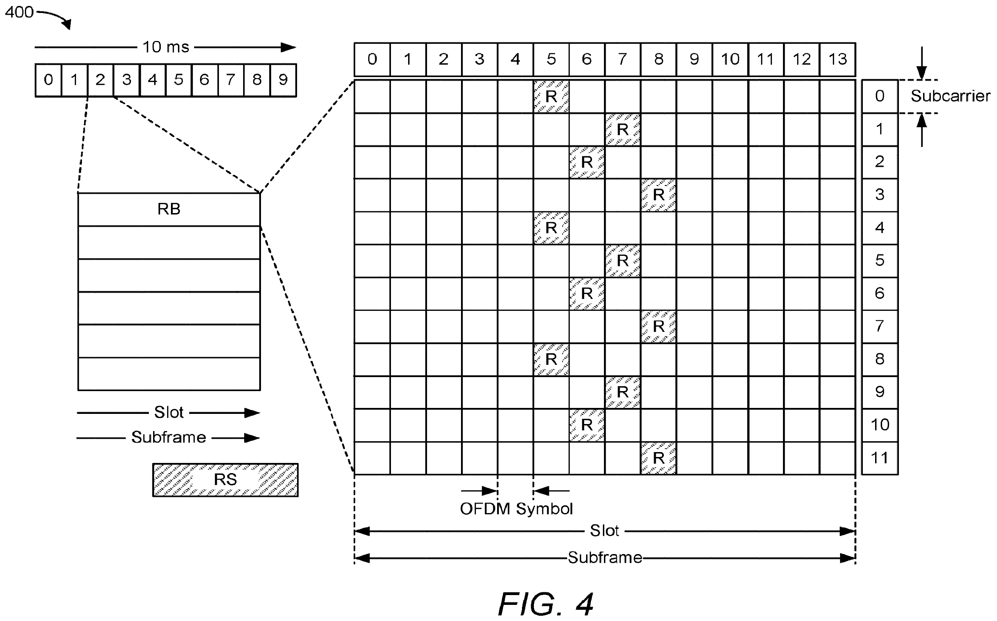

FIG. 4 is a diagram 400 illustrating an example frame structure, according to aspects of the disclosure. Various frame structures may be used to support downlink and uplink transmissions between network nodes (e.g., base stations and UEs). The frame structure may be a downlink or uplink frame structure. Other wireless communications technologies may have different frame structures and/or different channels.

LTE, and in some cases NR, utilizes orthogonal frequency-division multiplexing (OFDM) on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal fast Fourier transform (FFT) size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIG. 4, a numerology of 15 kHz is used. Thus, in the time domain, a 10 ms frame is divided into 10 equally sized subframes of 1 ms each, and each subframe includes one time slot. In FIG. 4, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIG. 4, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs may carry reference (pilot) signals (RS). The reference signals may include positioning reference signals (PRS), tracking reference signals (TRS), phase tracking reference signals (PTRS), cell-specific reference signals (CRS), channel state information reference signals (CSI-RS), demodulation reference signals (DMRS), primary synchronization signals (PSS), secondary synchronization signals (SSS), synchronization signal blocks (SSBs), sounding reference signals (SRS), etc., depending on whether the illustrated frame structure is used for uplink or downlink communication. FIG. 4 illustrates example locations of REs carrying a reference signal (labeled "R").

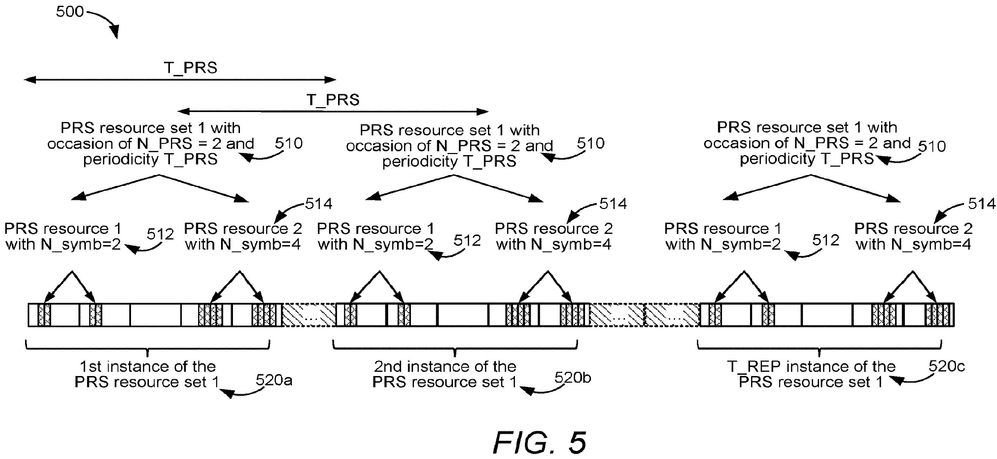

FIG. 5 is a diagram of an example PRS configuration 500 for the PRS transmissions of a given base station, according to aspects of the disclosure. In FIG. 5, time is represented horizontally, increasing from left to right. Each long rectangle represents a slot and each short (shaded) rectangle represents an OFDM symbol. In the example of FIG. 5, a PRS resource set 510 (labeled "PRS resource set 1") includes two PRS resources, a first PRS resource 512 (labeled "PRS resource 1") and a second PRS resource 514 (labeled "PRS resource 2"). The base station transmits PRS on the PRS resources 512 and 514 of the PRS resource set 510.

The PRS resource set 510 has an occasion length (N_PRS) of two slots and a periodicity (T_PRS) of, for example, 160 slots or 160 milliseconds (ms) (for 15 kHz subcarrier spacing). As such, both the PRS resources 512 and 514 are two consecutive slots in length and repeat every T_PRS slots, starting from the slot in which the first symbol of the respective PRS resource occurs. In the example of FIG. 5, the PRS resource 512 has a symbol length (N_symb) of two symbols, and the PRS resource 514 has a symbol length (N_symb) of four symbols. The PRS resource 512 and the PRS resource 514 may be transmitted on separate beams of the same base station.

Each instance of the PRS resource set 510, illustrated as instances 520a, 520b, and 520c, includes an occasion of length '2' (i.e., N_PRS=2) for each PRS resource 512, 514 of the PRS resource set. The PRS resources 512 and 514 are repeated every T_PRS slots up to the muting sequence periodicity T_REP. As such, a bitmap of length T_REP would be needed to indicate which occasions of instances 520a, 520b, and 520c of PRS resource set 510 are muted (i.e., not transmitted).

In an aspect, there may be additional constraints on the PRS configuration 500. For example, for all PRS resources (e.g., PRS resources 512, 514) of a PRS resource set (e.g., PRS resource set 510), the base station can configure the following parameters to be the same: (a) the occasion length (N_PRS), (b) the number of symbols (N_symb), (c) the comb type, and/or (d) the bandwidth. In addition, for all PRS resources of all PRS resource sets, the subcarrier spacing and the cyclic prefix can be configured to be the same for one base station or for all base stations. Whether it is for one base station or all base stations may depend on the UE's capability to support the first and/or second option.

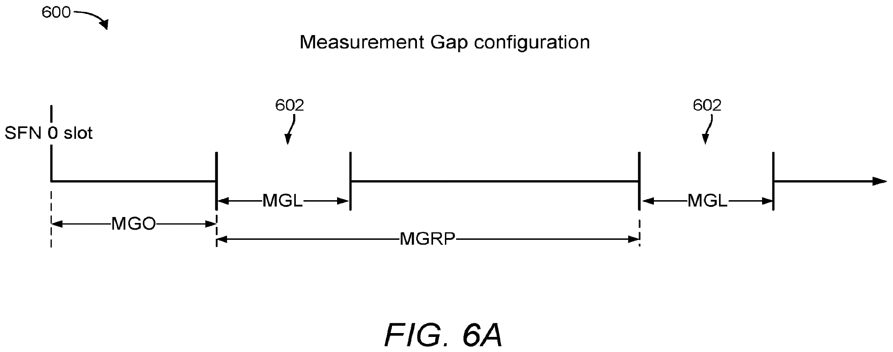

FIG. 6A is a diagram illustrating parameters of a measurement gap configuration 600 specifying a pattern of measurement gaps 602, according to aspects of the disclosure. The measurement gap offset (MGO) is the offset of the start of the gap pattern from the start of a slot or subframe within the measurement gap repetition period (MGRP). In some aspects, there are about 160 offset values, but not all of the values are applicable for all periodicities. More specifically, the offset has a value in the range from '0' to one less than the MGRP. Thus, for example, if the MGRP is 20 ms, then the offset can range from '0' to '19.' The measurement gap length (MGL) is the length of the measurement gap in milliseconds. The measurement gap length can have a value of 1.5ms, 3ms, 3.5ms, 4ms, 5.5ms, or 6ms. The MGRP defines the periodicity (in milliseconds) at which the measurement gap 602 repeats. It can have a value of 20ms, 40ms, 80ms, or 160ms. Although not shown in FIG. 6A, a measurement gap configuration 600 may also include a measurement gap timing advance (MGTA) parameter. If configured, the MGTA indicates the amount of time before the occurrence of the slot or subframe in which the measurement gap 602 is configured to begin. In some aspects, the MGTA can be 0.25 ms for FR2 or 0.5 ms for FR1.

It may be desirable to introduce additional MG patterns with MGL ≥ 10ms and MGRP ≥ 80ms. In this case, it is to be decided whether the new MG patterns will or will not be applicable for radio resource management (RRM) measurement, and details of the new MG patterns remain to be specified. Candidate values for MGL include 10ms, 18ms, 20ms, 34ms, 40ms, and 50ms. Candidate values for MGRP include 80ms, 160ms, 320ms, and 640ms. The values for combinations of MGL and MGRP remain to be specified, but candidate combinations include MGL = 40ms and MGRP = 160ms, MGL = 34ms and MGRP = 160ms, and MGL = 18ms and MGRP = 160ms.

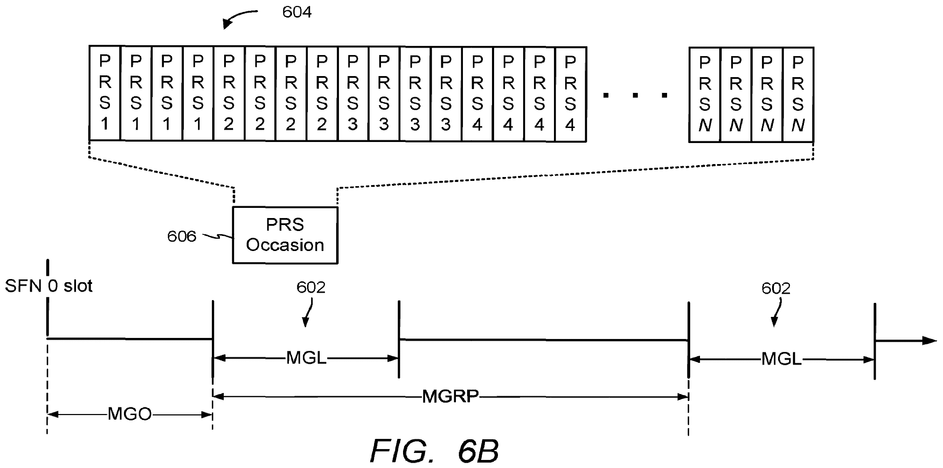

FIG. 6B is a diagram illustrating positioning reference signals 604, labeled PRS₁ through PRS_{N}, which are transmitted within a PRS occasion 606, which may span one or more (consecutive) slots according to the occasion length, within a measurement gap 602. PRS₁ is associated with one transmission/reception point (TRP), PRS₂ is associated with another TRP, and so on. In FIG. 6B, each PRS is repeated four times and the transmission of the next PRS immediately follows in the time domain, e.g., the PRSs are "tightly packed" in the time domain. Each TRP can use the same beam pattern or different beam patterns for each repetition. In FIG. 6B, PRSs 604 are transmitted for the entire duration of the PRS occasion 606, and the PRS occasion 606 occupies only a portion of the measurement gap 602, but other configurations are also contemplated by the present disclosure. Up to 256 TRPs can be configured via assistance data, which means that a UE may need a longer measurement gap to measure the PRSs from all of them. These longer gaps are needed in a periodic manner for tracking use cases, and a longer gap will have an impact on NR throughput.

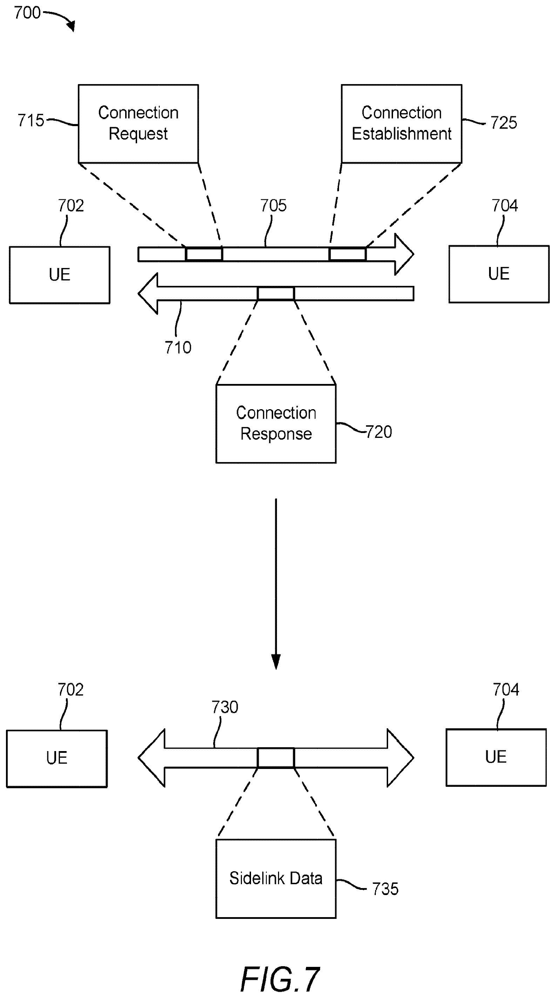

FIG. 7 illustrates an example of a wireless communications system 700 that supports wireless unicast sidelink establishment, according to aspects of the disclosure. In some examples, wireless communications system 700 may implement aspects of wireless communications systems 100, 200, and 250. Wireless communications system 700 may include a first UE 702 and a second UE 704, which may be examples of any of the UEs described herein. As specific examples, UEs 702 and 704 may correspond to V-UEs 160 in FIG. 1.

In the example of FIG. 7, the UE 702 may attempt to establish a unicast connection over a sidelink with the UE 704, which may be a V2X sidelink between the UE 702 and UE 704. As specific examples, the established sidelink connection may correspond to sidelinks 162 and/or 168 in FIG. 1. The sidelink connection may be established in an omni-directional frequency range (e.g., FR1) and/or a mmW frequency range (e.g., FR2). In some cases, the UE 702 may be referred to as an initiating UE that initiates the sidelink connection procedure, and the UE 704 may be referred to as a target UE that is targeted for the sidelink connection procedure by the initiating UE.

For establishing the unicast connection, access stratum (AS) (a functional layer in the UMTS and LTE protocol stacks between the RAN and the UE that is responsible for transporting data over wireless links and managing radio resources, and which is part of Layer 2) parameters may be configured and negotiated between the UE 702 and UE 704. For example, a transmission and reception capability matching may be negotiated between the UE 702 and UE 704. Each UE may have different capabilities (e.g., transmission and reception, 64 quadrature amplitude modulation (QAM), transmission diversity, carrier aggregation (CA), supported communications frequency band(s), etc.). In some cases, different services may be supported at the upper layers of corresponding protocol stacks for UE 702 and UE 704. Additionally, a security association may be established between UE 702 and UE 704 for the unicast connection. Unicast traffic may benefit from security protection at a link level (e.g., integrity protection). Security requirements may differ for different wireless communications systems. For example, V2X and Uu systems may have different security requirements (e.g., Uu security does not include confidentiality protection). Additionally, IP configurations (e.g., IP versions, addresses, etc.) may be negotiated for the unicast connection between UE 702 and UE 704.

In some cases, UE 704 may create a service announcement (e.g., a service capability message) to transmit over a cellular network (e.g., cV2X) to assist the sidelink connection establishment. Conventionally, UE 702 may identify and locate candidates for sidelink communications based on a basic service message (BSM) broadcasted unencrypted by nearby UEs (e.g., UE 704). The BSM may include location information, security and identity information, and vehicle information (e.g., speed, maneuver, size, etc.) for the corresponding UE. However, for different wireless communications systems (e.g., D2D or V2X communications), a discovery channel may not be configured so that UE 702 is able to detect the BSM(s). Accordingly, the service announcement transmitted by UE 704 and other nearby UEs (e.g., a discovery signal) may be an upper layer signal and broadcasted (e.g., in an NR sidelink broadcast). In some cases, the UE 704 may include one or more parameters for itself in the service announcement, including connection parameters and/or capabilities it possesses. The UE 702 may then monitor for and receive the broadcasted service announcement to identify potential UEs for corresponding sidelink connections. In some cases, the UE 702 may identify the potential UEs based on the capabilities each UE indicates in their respective service announcements.

The service announcement may include information to assist the UE 702 (e.g., or any initiating UE) to identify the UE transmitting the service announcement (UE 704 in the example of FIG. 7). For example, the service announcement may include channel information where direct communication requests may be sent. In some cases, the channel information may be RAT-specific (e.g., specific to LTE or NR) and may include a resource pool within which UE 702 transmits the communication request. Additionally, the service announcement may include a specific destination address for the UE (e.g., a Layer 2 destination address) if the destination address is different from the current address (e.g., the address of the streaming provider or UE transmitting the service announcement). The service announcement may also include a network or transport layer for the UE 702 to transmit a communication request on. For example, the network layer (also referred to as "Layer 3" or "L3") or the transport layer (also referred to as "Layer 4" or "L4") may indicate a port number of an application for the UE transmitting the service announcement. In some cases, no IP addressing may be needed if the signaling (e.g., PC5 signaling) carries a protocol (e.g., a real-time transport protocol (RTP)) directly or gives a locally-generated random protocol. Additionally, the service announcement may include a type of protocol for credential establishment and QoS-related parameters.

After identifying a potential sidelink connection target (UE 704 in the example of FIG. 7), the initiating UE (UE 702 in the example of FIG. 7) may transmit a connection request 715 to the identified target UE 704. In some cases, the connection request 715 may be a first RRC message transmitted by the UE 702 to request a unicast connection with the UE 704 (e.g., an "RRCSetupRequest" message). For example, the unicast connection may utilize the PC5 interface for the sidelink, and the connection request 715 may be an RRC connection setup request message. Additionally, the UE 702 may use a sidelink signaling radio bearer 705 to transport the connection request 715.

After receiving the connection request 715, the UE 704 may determine whether to accept or reject the connection request 715. The UE 704 may base this determination on a transmission/reception capability, an ability to accommodate the unicast connection over the sidelink, a particular service indicated for the unicast connection, the contents to be transmitted over the unicast connection, or a combination thereof. For example, if the UE 702 wants to use a first RAT to transmit or receive data, but the UE 704 does not support the first RAT, then the UE 704 may reject the connection request 715. Additionally or alternatively, the UE 704 may reject the connection request 715 based on being unable to accommodate the unicast connection over the sidelink due to limited radio resources, a scheduling issue, etc. Accordingly, the UE 704 may transmit an indication of whether the request is accepted or rejected in a connection response 720. Similar to the UE 702 and the connection request 715, the UE 704 may use a sidelink signaling radio bearer 710 to transport the connection response 720. Additionally, the connection response 720 may be a second RRC message transmitted by the UE 704 in response to the connection request 715 (e.g., an "RRCResponse" message).

In some cases, sidelink signaling radio bearers 705 and 710 may be the same sidelink signaling radio bearer or may be separate sidelink signaling radio bearers. Accordingly, a radio link control (RLC) layer acknowledged mode (AM) may be used for sidelink signaling radio bearers 705 and 710. A UE that supports the unicast connection may listen on a logical channel associated with the sidelink signaling radio bearers. In some cases, the AS layer (i.e., Layer 2) may pass information directly through RRC signaling (e.g., control plane) instead of a V2X layer (e.g., data plane).

If the connection response 720 indicates that the UE 704 accepted the connection request 715, the UE 702 may then transmit a connection establishment 725 message on the sidelink signaling radio bearer 705 to indicate that the unicast connection setup is complete. In some cases, the connection establishment 725 may be a third RRC message (e.g., an "RRCSetupComplete" message). Each of the connection request 715, the connection response 720, and the connection establishment 725 may use a basic capability when being transported from one UE to the other UE to enable each UE to be able to receive and decode the corresponding transmission (e.g., the RRC messages).

Additionally, identifiers may be used for each of the connection request 715, the connection response 720, and the connection establishment 725. For example, the identifiers may indicate which UE 702/704 is transmitting which message and/or for which UE 702/704 the message is intended. For physical (PHY) layer channels, the RRC signaling and any subsequent data transmissions may use the same identifier (e.g., Layer 2 IDs). However, for logical channels, the identifiers may be separate for the RRC signaling and for the data transmissions. For example, on the logical channels, the RRC signaling and the data transmissions may be treated differently and have different acknowledgement (ACK) feedback messaging. In some cases, for the RRC messaging, a physical layer ACK may be used for ensuring the corresponding messages are transmitted and received properly.

One or more information elements may be included in the connection request 715 and/or the connection response 720 for UE 702 and/or UE 704, respectively, to enable negotiation of corresponding AS layer parameters for the unicast connection. For example, the UE 702 and/or UE 704 may include packet data convergence protocol (PDCP) parameters in a corresponding unicast connection setup message to set a PDCP context for the unicast connection. In some cases, the PDCP context may indicate whether or not PDCP duplication is utilized for the unicast connection. Additionally, the UE 702 and/or UE 704 may include RLC parameters when establishing the unicast connection to set an RLC context for the unicast connection. For example, the RLC context may indicate whether an AM (e.g., a reordering timer (t-reordering) is used) or an unacknowledged mode (UM) is used for the RLC layer of the unicast communications.

Additionally, the UE 702 and/or UE 704 may include medium access control (MAC) parameters to set a MAC context for the unicast connection. In some cases, the MAC context may enable resource selection algorithms, a hybrid automatic repeat request (HARQ) feedback scheme (e.g., ACK or negative ACK (NACK) feedback), parameters for the HARQ feedback scheme, carrier aggregation, or a combination thereof for the unicast connection. Additionally, the UE 702 and/or UE 704 may include PHY layer parameters when establishing the unicast connection to set a PHY layer context for the unicast connection. For example, the PHY layer context may indicate a transmission format (unless transmission profiles are included for each UE 702/704) and a radio resource configuration (e.g., bandwidth part (BWP), numerology, etc.) for the unicast connection. These information elements may be supported for different frequency range configurations (e.g., FR1 and FR2).

In some cases, a security context may also be set for the unicast connection (e.g., after the connection establishment 725 message is transmitted). Before a security association (e.g., security context) is established between the UE 702 and UE 704, the sidelink signaling radio bearers 705 and 710 may not be protected. After a security association is established, the sidelink signaling radio bearers 705 and 710 may be protected. Accordingly, the security context may enable secure data transmissions over the unicast connection and the sidelink signaling radio bearers 705 and 710. Additionally, IP layer parameters (e.g., link-local IPv4 or IPv6 addresses) may also be negotiated. In some cases, the IP layer parameters may be negotiated by an upper layer control protocol running after RRC signaling is established (e.g., the unicast connection is established). As noted above, the UE 704 may base its decision on whether to accept or reject the connection request 715 on a particular service indicated for the unicast connection and/or the contents to be transmitted over the unicast connection (e.g., upper layer information). The particular service and/or contents may be also indicated by an upper layer control protocol running after RRC signaling is established.

After the unicast connection is established, the UE 702 and UE 704 may communicate using the unicast connection over a sidelink 730, where sidelink data 735 is transmitted between the two UEs 702 and 704. The sidelink 730 may correspond to sidelinks 162 and/or 168 in FIG. 1. In some cases, the sidelink data 735 may include RRC messages transmitted between the two UEs 702 and 704. To maintain this unicast connection on sidelink 730, UE 702 and/or UE 704 may transmit a keep alive message (e.g., "RRCLinkAlive" message, a fourth RRC message, etc.). In some cases, the keep alive message may be triggered periodically or on-demand (e.g., event-triggered). Accordingly, the triggering and transmission of the keep alive message may be invoked by UE 702 or by both UE 702 and UE 704. Additionally or alternatively, a MAC control element (CE) (e.g., defined over sidelink 730) may be used to monitor the status of the unicast connection on sidelink 730 and maintain the connection. When the unicast connection is no longer needed (e.g., UE 702 travels far enough away from UE 704), either UE 702 and/or UE 704 may start a release procedure to drop the unicast connection over sidelink 730. Accordingly, subsequent RRC messages may not be transmitted between UE 702 and UE 704 on the unicast connection.

NR is capable of supporting various sidelink ranging and positioning techniques. Sidelink-based ranging enables the determination of the relative distance(s) between UEs and optionally their absolute position(s), where the absolute position of at least one involved UE is known. This technique is valuable in situations where global navigation satellite system (GNSS) positioning is degraded or unavailable (e.g., tunnels, urban canyons, etc.) and can also enhance range and positioning accuracy when GNSS is available. Sidelink-based ranging can be accomplished using a three-way handshake for session establishment, followed by the exchange of positioning reference signals (PRS), and concluded by messaging to exchange measurements based on PRS transmission and receipt from peer UEs.

Sidelink ranging is based on calculating an inter-UE round-trip-time (RTT) measurement, as determined from the transmit and receive times of PRS (e.g., a wideband positioning signal defined in LTE and NR). Each UE reports an RTT measurement to all other participating UEs, along with its location (if known). For UEs having zero or inaccurate knowledge of their location, the RTT procedure yields an inter-UE range between the involved UEs. For UEs having accurate knowledge of their location, the range yields an absolute position. UE participation, PRS transmission, and subsequent RTT calculation is coordinated by an initial three-way messaging handshake (a PRS request, a PRS response, and a PRS confirmation), and a message exchange after PRS transmission (post PRS messages) to share measurements after receiving a peer UE's PRS.

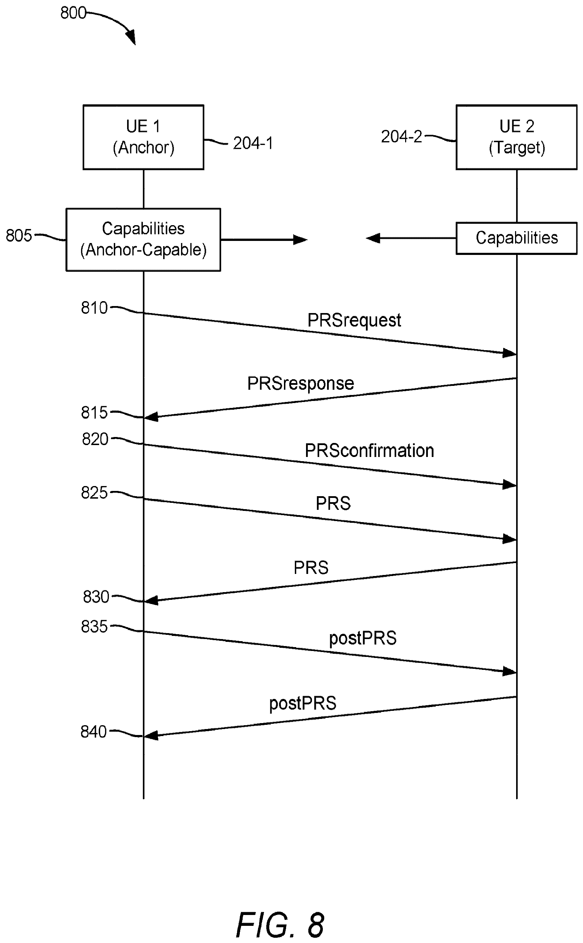

FIG. 8 illustrates an example sidelink ranging and positioning procedure 800, according to aspects of the disclosure. The sidelink ranging and positioning procedure 800 may also be referred to as a sidelink RTT positioning procedure. Sidelink ranging is based on calculating an inter-UE RTT measurement, as determined from the transmit and receive times of PRS (e.g., a wideband reference signal defined in LTE and NR for positioning). Each UE reports an RTT measurement to all other participating UEs, along with its location (if known). For UEs having zero or inaccurate knowledge of their location, the RTT procedure yields an inter-UE range between the involved UEs that can be used to calculate or estimate relative positions between the UEs. For UEs having accurate knowledge of their location, the range can be used to calculate or estimate an absolute location of other participating UEs. UE participation, PRS transmission, and subsequent RTT calculation is coordinated by an initial three-way messaging handshake (a PRS request, a PRS response, and a PRS confirmation), and a message exchange after PRS transmission (post PRS messages) to share measurements after receiving a peer UE's PRS.

The sidelink ranging and positioning procedure 800 (or session) begins with the broadcast of capability information by the involved peer UEs at stage 805. As shown in FIG. 8, one of the peer UEs, UE 204-1 (e.g., any of the sidelink-capable UEs described herein), is capable of being an anchor UE for the sidelink ranging and positioning procedure 800, meaning it has a known location. As such, the anchor UE 204-1 includes an indication in its capability message(s) that it is capable of being an anchor UE for the sidelink ranging and positioning procedure 800. The capability message(s) may also include the location of the anchor UE 204-1, or this may be provided later. The other UE, UE 204-2 (e.g., any other of the sidelink-capable UEs described herein), is a target UE, meaning it has an unknown or inaccurate location and is attempting to be located. Based on the capability information received from the anchor UE 204-1, indicating that the anchor UE 204-1 is an anchor UE, the target UE 204-2 knows that it will be able to determine its location based on performing the sidelink ranging and positioning procedure 800 with the anchor UE 204-1. To determine its absolute location, the target UE needs to know the location of the anchor UE. However, for relative positioning, the target UE may not need to know the location of the anchor UE because it may only need to determine its location relative to the location of the anchor UE. In another aspect, the anchor UE may determine the absolute location of the target UE and provide that information to the target UE.

After the initial capability exchange, the involved UEs 204 perform a three-way messaging handshake. At stage 810, the anchor UE 204-1 transmits a PRS request (labeled "PRSrequest") to the target UE 204-2. At stage 815, the target UE 204-2 transmits a PRS response (labeled "PRSresponse") to the anchor UE 204-1. At stage 820, the anchor UE 204-1 transmits a PRS confirmation to the target UE 204-2. At this point, the three-way messaging handshake is complete. Note that although FIG. 8 illustrates the anchor UE 204-1 initiating the three-way message handshake, it may instead be initiated by the target UE 204-2.

At stages 825 and 830, the involved peer UEs 204 transmit PRSs to each other. The resources on which the PRSs are transmitted may be configured / allocated by the network (e.g., one of the UE's 204 serving base station) or negotiated by the UEs 204 during the three-way messaging handshake. The anchor UE 204-1 measures the transmission-to-reception (Tx-Rx) time difference between the transmission time of PRS at stage 825 and the reception time of PRS at stage 830. The target UE 204-2 measures the reception-to-transmission (Rx-Tx) time difference between the reception time of PRS at stage 825 and the transmission time of PRS at stage 830. Note that although FIG. 8 illustrates the anchor UE 204-1 transmitting PRS first, the target UE 204-2 may instead transmit PRS first.

At stages 835 and 840, the peer UEs 204 exchange their respective time difference measurements in post PRS messages (labeled "postPRS"). If the anchor UE 204-1 has not yet provided its location to the target UE 204-2, it may do so at this point. Each UE 204 is then able to determine the RTT between each UE 204 based on the Tx-Rx and Rx-Tx time difference measurements (specifically, the difference between the Tx-Rx and Rx-Tx time difference measurements). Based on the RTT measurement and the speed of light, each UE 204 can then estimate the distance (or range) between the two UEs 204 (specifically, half the RTT measurement multiplied by the speed of light). Since the target UE 204-2 also has the absolute location (e.g., geographic coordinates) of the anchor UE 204-1, the target UE 204-2 can use that location and the distance to the anchor UE 204-1 to determine its own absolute location.

Note that while FIG. 8 illustrates two UEs 204, a UE may perform, or attempt to perform, the sidelink ranging and positioning procedure 800 with multiple UEs.

Another aspect of sidelink positioning is the configuration of sidelink resource pools for positioning (RP-Ps). A sidelink resource pool may be configured with one or more slots and one or more subchannels or resource blocks, e.g., within a sidelink bandwidth part, for sidelink communications. In some aspects, the 12 symbols (for a slot with normal cyclic prefix) between the first symbol of a sidelink slot (for automatic gain control (AGC)) and the last symbol (the gap) in the time domain and the allocated subchannel(s) in the frequency domain form a resource pool for sidelink transmission and/or reception. One or more RP-Ps can be configured within a resource pool specifically for positioning purposes. Each RP-P may include an offset, periodicity, number of consecutive symbols within a slot (e.g., as few as one symbol), and/or the bandwidth within a component carrier (or the bandwidth across multiple component carriers). In addition, each RP-P can be associated with a zone or a distance from a reference location.

A base station (or a UE) can assign, to another UE, one or more resource configurations from the RP-Ps. Additionally or alternatively, a UE (e.g., a relay or a remote UE) can request one or more RP-P configurations, and it can include in the request one or more of the following: (1) its location information (or zone identifier), (2) periodicity, (3) bandwidth, (4) offset, (5) number of symbols, and (6) whether a configuration with "low interference" is needed (which can be determined through an assigned quality of service (QoS) or priority).

A base station or a UE can configure/assign rate matching resources or RP-P for rate matching and/or muting to a sidelink UE such that when a collision exists between the assigned resources and another resource pool that contains data (PSSCH) and/or control (PSCCH), the sidelink UE is expected to rate match, mute, and/or puncture the data, DMRS, and/or CSI-RS within the colliding resources. This would enable orthogonalization between positioning and data transmissions for increased coverage of PRS signals.

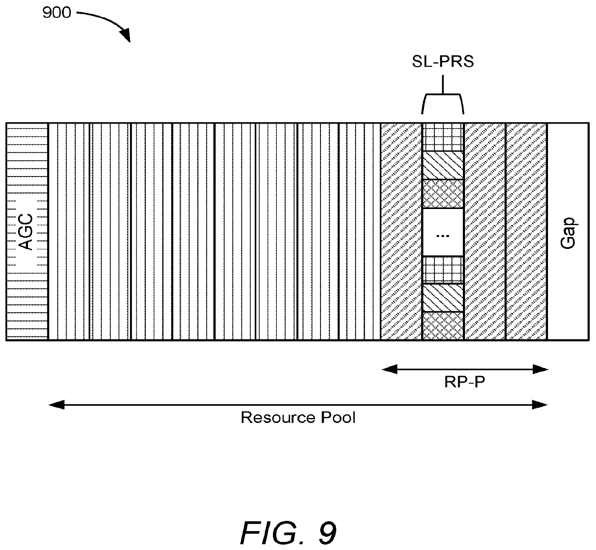

FIG. 9 is a diagram 900 illustrating an example of a resource pool for positioning within a sidelink resource pool, according to aspects of the disclosure. In the example of FIG. 9, time is represented horizontally and frequency is represented vertically. In the time domain, the length of each block is an orthogonal frequency division multiplexing (OFDM) symbol, and the 14 symbols make up a slot. In the frequency domain, the height of each block is a sub-channel. It is noted that, while FIG. 9 shows a slot format with 14 symbols for normal cyclic prefix, the present disclosure is not limited thereto but equally applicable to different slot formats, such as a slot format with 12 symbols for an extended cyclic prefix, as well as to mini-slots.

In the example of FIG. 9, the entire slot (except for the first and last symbols) can be a resource pool for sidelink transmission and/or reception. That is, any of the symbols other than the first and last can be allocated for transmission and/or reception. However, an RP-P for sidelink transmission/reception is allocated in the last four pre-gap symbols of the slot. As such, non-sidelink positioning data, such as user data, CSI-RS, and control information, can only be transmitted in the first eight post-AGC symbols and not in the last four pre-gap symbols to prevent a collision with the configured RP-P. The non-sidelink positioning data that would otherwise be transmitted in the last four pre-gap symbols can be punctured or muted, or the non-sidelink positioning data that would normally span more than the eight post-AGC symbols can be rate matched to fit into the eight post-AGC symbols.

Sidelink positioning reference signals (SL-PRS) may be defined to enable sidelink positioning procedures among UEs. Like a downlink PRS (DL-PRS), an SL-PRS resource may be composed of one or more resource elements (e.g., one OFDM symbol in the time domain and one subcarrier in the frequency domain). SL-PRS resources may be designed with a comb-based pattern to enable fast Fourier transform (FFT)-based processing at the receiver. SL-PRS resources may be composed of unstaggered, or only partially staggered, resource elements in the frequency domain to provide small time of arrival (TOA) uncertainty and reduced overhead of each SL-PRS resource. SL-PRS may also be associated with specific RP-Ps (e.g., certain SL-PRS may be allocated in certain RP-Ps). SL-PRS may also be defined with intra-slot repetition (not shown in FIG. 9) to allow for combining gains (if needed). There may also be inter-UE coordination of RP-Ps to provide for dynamic SL-PRS and data multiplexing while minimizing SL-PRS collisions.

Rel-16 NR positioning specifies measurement gaps for positioning (MGPs) during which a UE may perform DL-PRS measurements. When a UE is configured with measurement gaps, the UE is not expected to process any other DL-signals or DL-channels other than the main signal of interest (e.g., SSBs for RRM, PRS for positioning etc.). Likewise, no UL transmission is required of the UE during MGPs. In other words, a measurement gap may refer to specific time-frequency-resources dedicated to performing measurement(s), such as RRM, positioning, etc. Measurement gaps are typically configured by the network via RRC signaling, and the scheduler takes those gaps into account. Per-UE and Per-FR (e.g., FR1, FR2, etc.) gaps may be defined.

Thus, MGPs provide a number of benefits. For example, a UE may be operating within one active bandwidth part (BWP) but the DL-PRS signals may exist within a bandwidth that is not fully within the active BWP. In this scenario, a measurement gap provides an opportunity for the UE to perform frequency retuning, i.e., to retune the RF transmission and reception chains to a BW that fully includes the DL-PRS signals to be measured (and to optionally retune back to the original BWP).

In addition, a DL-PRS may have a different timing than the serving cell timing, so the UE may not be able to use a fast Fourier transform (FFT) based on the serving cell timing. In this scenario, a measurement gap allows the UE to adjust its timing to accommodate the DL-PRS measurements.

In addition, a UE typically has limited capability to process DL-PRS signals in each slots. In this scenario, a measurement gap provides extra slots after DL-PRS reception but before normal UL/DL transmissions resume, which gives the UE time to complete the UE processing of the observed PRS in that occasion. For example, a DL-PRS occasion may be 5ms long, but the total measurement gap duration can be 10ms so that the UE gets an additional 5ms to finish the processing.

In order to inform the network of the UE's capability, the UE may report capability information for processing. The following table illustrates some of the fields that the UE may use for this purpose:

**Table 1 NR-DL-PRS-ProcessingCapability field descriptions**

| |
|---|
| ***maxSupportedFreqLayers*** |
| Indicates the maximum number of positioning frequency layers supported by the UE. |
| ***supportedBandwithPRS*** |
| Indicates the maximum number of DL-PRS bandwidth in MHz, which is supported and reported by the UE. |
| ***dl-PRS-BufferType*** |
| Indicates DL-PRS buffering capability. Value *type1* indicates sub-slot/symbol level buffering and value *type2* indicates slot level buffering. |
| ***durationOfPRS-Processing*** |
| Indicates the duration *N* of DL-PRS symbols in units of ms a UE can process every T ms assuming maximum DL-PRS bandwidth provided in *supportedBandwidthPRS* and comprises the following subfields: |
| *- **durationOfPRS-ProcessingSymbols:*** This field specifies the values for *N.* Enumerated values indicate 0.125, 0.25, 0.5, 1, 2, 4, 8, 12, 16, 20, 25, 30, 35, 40, 45, 50 ms. |
| - ***durationOfPRS-ProcessingSymbolsInEveryTms:*** This field specifies the values for *T*. Enumerated values indicate 8, 16, 20, 30, 40, 80, 160, 320, 640, 1280 ms. |
| ***maxNumOfDL-PRS-ResProcessedPerSlot*** |
| Indicates the maximum number of DL-PRS resources that UE can process in a slot. SCS: 15 kHz, 30 kHz, 60 kHz are applicable for FR1 bands. SCS: 60 kHz, 120 kHz are applicable for FR2 bands. |
| ***simulLTE-NR-PRS*** |
| Indicates whether the UE supports parallel processing of LTE PRS and NR PRS. |

Thus, a UE can report its capability for:
- Maximum bandwidth (BW) in MHz;
- Whether it buffers at slot level or sub-slot/symbol level;
- (*N, T*) *: N* ms of Uu-PRS (DL-PRS) can be processed every *T* ms, assuming maximum BW;
- Maximum number of Uu-PRS (DL-PRS) it can process in a slot; and
- Whether or not it can parallel process LTE PRS and NR PRS (LTE PRS and NR PRS are both Uu-PRS (DL-PRS), and have separate assistance data, independent measurement reporting, and independent compute needs).

In Uu, the network is fully in control of the UE scheduling and can avoid scheduling the UE for the duration of an MGP. However, there is no such consideration for sidelink (SL) positioning. Given that processing DL-PRS requires MGPs at the UE, processing SL-PRS may also require MGPs at the UE. Current standards are silent on the subject of how to manage MGPs in the sidelink for sidelink positioning. For example, current standards do not mention, much less define, SL-MGPs.

Therefore, techniques to define and manage SL-MGPs to measure SL-PRS signals from UEs, including techniques by which a UE can advertise its capability to process same, are herein presented. Hereinafter, the term "DL-MGP" refers to an MGP for measuring and processing DL-PRS, and the term "SL-MGP" refers to an MGP for measuring and processing SL-PRS.

In some aspects, SL-MGPs are defined to enable a UE to measure SL-PRS signals from other UEs. During the SL-MGP, a UE can retune from a first resource pool (RP1) for (general sidelink) communication to a second (different) resource pool (RP2) for sidelink positioning, measure the SL-PRS, and retune back to RP1. It is noted that in some scenarios, such as where RP2 is wholly contained within RP1, retuning may not be needed. In some aspects, automatic gain control (AGC) settings from RP1 may be carried over to RP2.

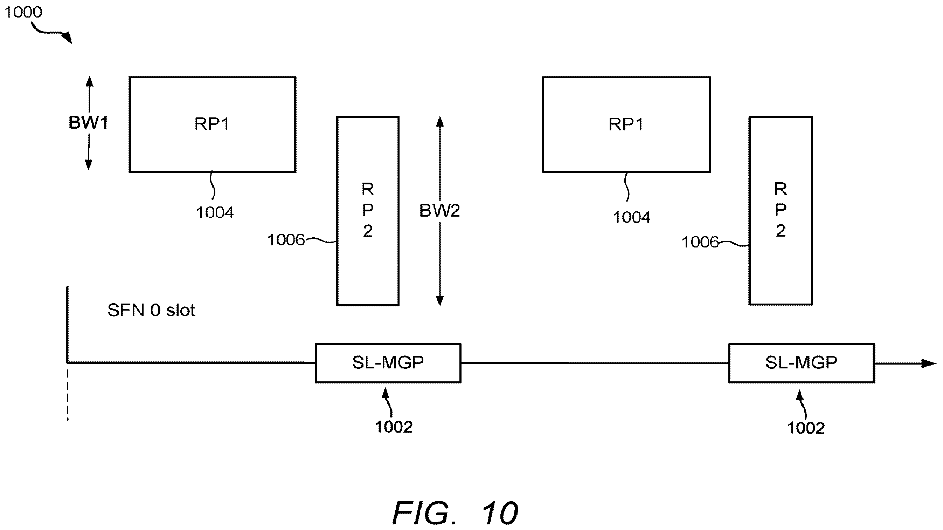

FIG. 10 is a time-frequency diagram 1000 illustrating example SL-MGPs 1002 as well as RP1s 1004 occupying a first bandwidth BW1, and RP2s 1006 occupying a second bandwidth BW2. In the example shown in FIG. 10, the SL-MGP 1002 gives the UE time to retune from BW1 to BW2, perform the SL-PRS measurements during RP2, and process the SL-PRS measurements, before needing to retune back to BW1 to use RP1 and optionally repeat the process. While FIG. 10 shows separate RPs for data and positioning, the same principles may be applied even when the same RP is used for data and positioning, e.g., using the SL-MGP to provide additional time for the UE to process the SL-PRS measurements taken during the SL-MGP. In other words, retuning may not be needed in case the same resource pool is used for data (general sidelink communications) and positioning (SL-PRS measurements).

In some aspects, a UE can advertise its capability to perform processing within an SL-MGP. For example, in some aspects, a pair of parameters (*N_{SL},T_{SL}*) may be defined, indicating that a UE can process *N_{SL}* ms of SL-PRS in *T_{SL}* ms of time. In some aspects, a UE may advertise a maximum number of SL-PRS that it can process in each millisecond of time. In some aspects, a UE can indicate whether or not it can perform simultaneous or parallel processing of Uu-PRS and SL-PRS. Thus, a UE according to aspects of the disclosure can report its capability for one or more of the following:
- (*N_{SL}, T_{SL}*) *: N_{SL}* ms of SL-PRS can be processed every *T_{SL}* ms, assuming maximum BW;
- Maximum number of SL-PRS it can process in a slot; or
- Whether or not it can parallel process Uu-PRS and SL-PRS.

In NR, the network can configure the UE with DL-MGPs to measure DL-PRS. The network may consider the UE PRS processing capability and duration of DL-PRS. Additionally or alternatively, the UE may request specific DL-MGP patterns and/or parameters. For NR sidelink, two sidelink modes have been defined: in SL mode 1 (SLMode1), the base station fully controls the sidelink communications, e.g., assigns and manages the SL radio resources for SL communications, and in SL mode 2 (SLMode2), the UE, rather than the base station, controls the sidelink communications, e.g., autonomously selects SL radio resources from a resource pool.

For SLMode1, in some aspects, the network configures the UE with at least one SL-MGP. The network may configure the at least one SL-MGP to include additional processing time wherein the amount of additional processing time may be based on a pattern of SL-PRS. The location server (e.g., an LMF), may be aware of the SL-PRS configurations of all of the UEs in a geographical area, and may combine this information with UE capability information to determine an SL-MGP pattern as for instance described with respect to FIGS. 6A and 6B. In some aspects, the UE may request an SL-MGP for an SL-PRS measurement. In SLMode1, the network may ensure that no SL transmission is scheduled to the target UE during its SL-MGP period. It is noted that the SL-MGP(s) may impact the ability of the UE to transmit on other carriers not directly associated with the SL transmission. Thus, in some aspects, the UE may inform the network that it needs per-FR, per-CC, and/or per-UE measurement gaps.

For both SLMode1 and SLMode2, in some aspects, upon receiving a configuration of SL-PRS from one or more neighboring UEs, a target UE may autonomously determine an SL-MGP configuration, including at least one SL-MGP. The SL-MGP configuration may include an SL-MGP pattern, duration, periodicity, and/or persistence (number of periods for which SL-MGP is applied). In some aspects, the UE may choose to include a subset of neighboring UEs, ignore SL-PRS from a (different) subset of UEs, or both, based on channel characteristics, such as RSRP, and/or other metrics, such as the number of anchors needed for positioning, etc. In some aspects, the UE may advertise information on the determined SL-MGP to neighboring UEs so that any groupcast/unicast messages can be transmitted to not overlap with the SL-MGP, when feasible. In some aspects, the UE may advertise the SL-MGP pattern, duration and persistence information (e.g., the UE will apply SL-MGP for at least *M* periods, etc.) In some aspects, the UE can advertise that one or more SL-MGPs may be further extended. In some aspects, the UE can advertise any of this information via a new or modified sidelink control information (SCI) format, or with a new sidelink MAC-CE, or with RRC or RRC-like messages.

In a scenario with an active Uu connection, in some aspects, a UE may inform the base station about at least one instance of SL-MGP and/or the determined SL-MGP configuration so that the base station can avoid scheduling on DL and/or UL slots which overlap with the SL-MGP.

In some circumstances, a network may want to schedule high priority traffic (either on Uu or SL), and the resources for the high priority traffic may overlap with an SL-MGP, either previously configured by the network or autonomously determined by the target UE. For SLMode1, in some aspects, the network may send a DCI or MAC-CE to cancel one or more particular instances of SL-MGP. For both SLMode1 and SLMode2, an indication of high priority traffic may come from UE upper layers or from other UEs wanting to send data to the target UE. In these situations, in some aspects, the UE may be expected to drop SL-PRS processing for the corresponding one or more instances of SL-MGP after receiving such an indication. In some aspects, the UE will not drop the SL-PRS processing if the indication was not received at least a threshold number of slots in advance of the respective SL-MGP instance.

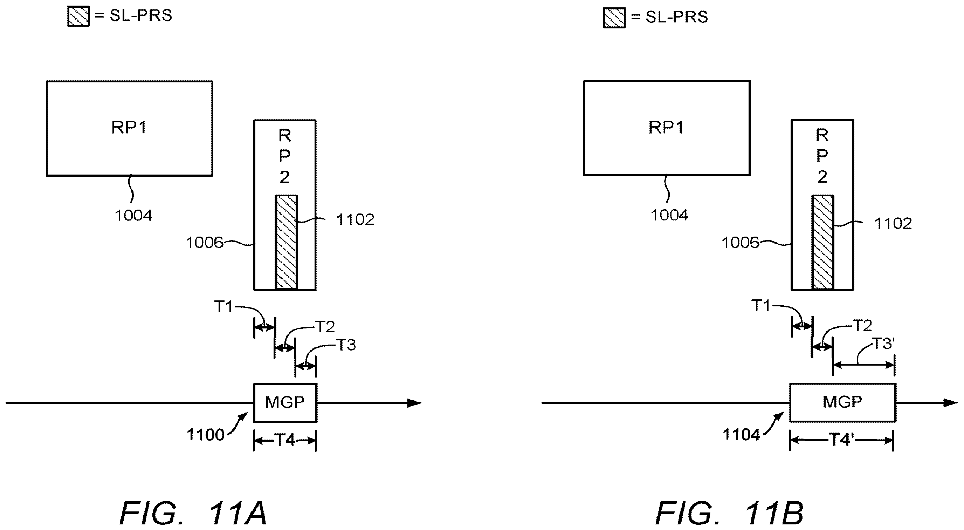

FIG. 11A through FIG. 11C are time frequency diagrams showing example SL-MGPs with different durations, according to aspects of the disclosure. FIGS. 11A-11C illustrate scenarios in which a UE (autonomously) determines its own SL-MGP 1002 by observing the SL-PRS configuration(s) indicated by anchor and/or neighboring UE(s) participating in a positioning session. FIGS. 11A-11C illustrate an example in which SL communications are within resource pool RP1 1004 and SL-PRS signals are within resource pool RP2 1006.

As shown in FIG. 11A, in some aspects, the SL-MGP 1100 starts T1 ms before the first SL-PRS instance in an occasion 1102 (e.g., for retuning the RF transceiver); continues for a time T2 ms while the SL-PRSs are transmitted, and ends after T3 ms of processing time for processing the received SL-PRS signals, for a total amount of time T4. T4 may indicate the measurement gap length (MGL) of FIG. 6B. In FIG. 11A, the SL-MGP 1100 ends before the end of RP2 1006, and thus the SL-MGP 1100 duration T4 is fully contained within RP2 1006.

As shown in FIG. 11B, in some aspects, the SL-MGP 1104 includes additional processing time after RP2 1006 is completed (T3' > T3), starting immediately after the end of RP2 1006. In other words, SL-MGP 1104 extends contiguously beyond the end of RP2 to include additional processing time. The total duration of SL-MGP 1104 is T4', where T4' > T4. In this aspect, the additional processing time is provided irrespective of whether the next slots are DL, UL or resources in other SL RPs.

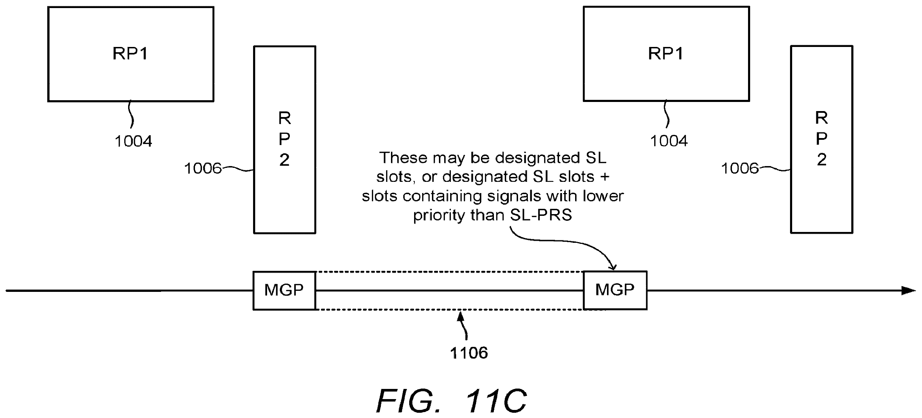

As shown in FIG. 11C, in some aspects, the SL-MGP 1106 also includes some additional time period after the end of RP2, but not starting until a designated RP (e.g., RP1 1004) starts next. In some aspects, the additional time cannot be taken from DL and UL slots, but instead must only be taken from designated SL slots. In other aspects, the additional time may be taken from slots that contain signals with lower priority than SL-PRS signals. This may result in unpredictable behavior since the occurrence of lower priority signals may not be deterministic. That is, the UE cannot always guarantee that the next slot will contain a lower priority signal that can be preempted in favor of additional processing of the received SL-PRS signals.

Moreover, in SLMode1, a location server may coordinate with base stations to enable clustered transmissions of SL-PRS, which ensures less or minimum disruption of data transmissions when measuring SL-PRS, but in SLMode2, this is not feasible since the UEs may not necessarily coordinate with each other with respect to SL-PRS transmissions in a resource pool. Thus, in some aspects of the present disclosure, UEs may coordinate to ensure clustered transmissions of SL-PRS signals. For example, if one UE chooses slot n, comb offset 1, another UE may choose the same slot and symbols with a different comb offset, e.g., as a high priority option. Where comb multiplexing is not feasible, the other UE may choose different resources in the same slot or resources in the closest nearby slot to ensure compact transmissions of SL-PRS from multiple UEs. In some aspects, these patterns can be learned over time using coordination algorithms.

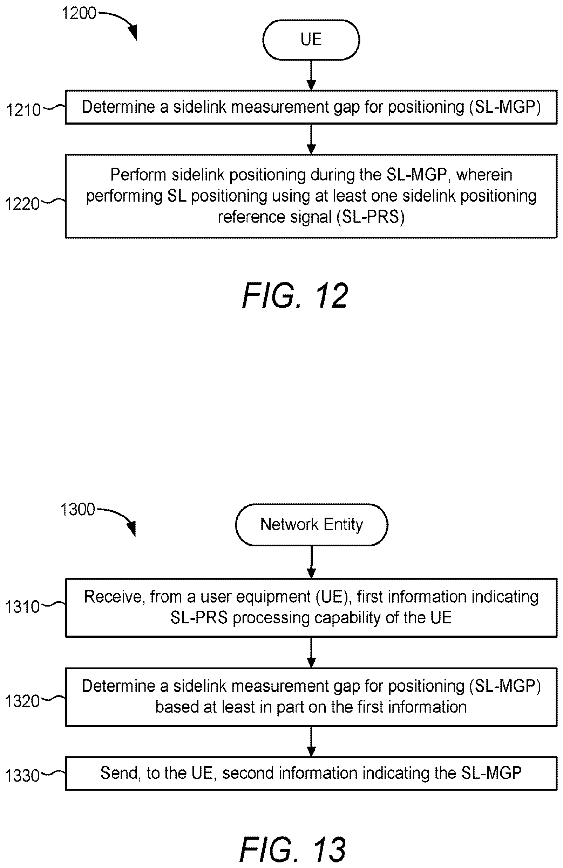

FIG. 12 is a flowchart of an example process 1200 associated with sidelink measurement and processing gaps for positioning, according to aspects of the disclosure. In some implementations, one or more process blocks of FIG. 12 may be performed by a user equipment (UE) (e.g., UE 104). In some implementations, one or more process blocks of FIG. 12 may be performed by another device or a group of devices separate from or including the UE. Additionally, or alternatively, one or more process blocks of FIG. 12 may be performed by one or more components of UE 302, such as processor(s) 332, memory 340, WWAN transceiver(s) 310, short-range wireless transceiver(s) 320, satellite signal receiver 330, sensor(s) 344, user interface 346, and sidelink manager(s) 342, any or all of which may be means for performing the operations of process 1200.

As shown in FIG. 12, at block 1210, process 1200 may include determining a sidelink measurement gap for positioning (SL-MGP). Means for performing the operation of block 1210 may include the processor(s) 332, memory 340, or WWAN transceiver(s) 310 of the UE 302. For example, the UE 302 may receive information indicating or defining the SL-MGP from a base station or location server, using receiver(s) 312.

In some aspects, determining the SL-MGP comprises determining the SL-MGP based on first information indicating SL-PRS processing capability of the UE. In some aspects, the first information comprises at least one of an indication that the UE can or cannot process SL-PRS, an indication of a maximum number of SL-PRS signals that the UE can process simultaneously, an indication of a maximum number of SL-PRS signals that the UE can process per a unit of time, or an indication that the UE can or cannot process SL-PRS signals and non-SL-PRS signals simultaneously. In some aspects, determining the SL-MGP comprises sending the first information to a base station or location server and receiving the SL-MGP from the base station or location server.

In some aspects, determining the SL-MGP comprises determining a duration of time for the SL-MGP. In some aspects, determining the duration of time for the SL-MGP comprises setting the duration of time for the SL-MGP to be a sum of one or more of a first duration of time for retuning the RF transceiver to a bandwidth occupied by a first resource pool for positioning that contains the at least one SL-PRS, a second duration of time for SL-PRS signal transmissions, or a third duration of time for processing the SL-PRS signal transmissions.

In some aspects, determining the SL-MGP comprises coordinating with at least one other UE engaged in sidelink communication to cluster SL-PRS transmissions and to define an SL-MGP that includes the clustered SL-PRS transmissions.

As further shown in FIG. 12, at block 1220, process 1200 may include performing sidelink positioning during the SL-MGP using at least one sidelink positioning reference signal (SL-PRS). Means for performing the operation of block 1220 may include the processor(s) 332, memory 340, or WWAN transceiver(s) 310 of the UE 302. For example, the UE 302 may perform sidelink positioning during the SL-MGP using receiver(s) 312 or transmitter(s) 314. In some aspects, performing sidelink positioning during the SL-MPG using at least one SL-PRS comprises at least one of transmitting an SL-PRS or receiving an SL-PRS. In some aspects, performing sidelink positioning during the SL-MGP comprises, during the SL-MGP, retuning a radio frequency (RF) transceiver of the UE from a first bandwidth occupied by a resource pool for data communication to a second bandwidth occupied by a resource pool for positioning, performing sidelink positioning within the second bandwidth, and retuning the RF transceiver of the UE back to the first bandwidth.

In some aspects, the SL-MGP occupies a portion of the time domain that is contained within the resource pool for positioning, such as shown in FIG. 11A. In some aspects, a first portion of the SL-MGP occupies a portion of the time domain within the resource pool for positioning and a second portion of the SL-MGP occupies a portion of the time domain that is not within the resource pool for positioning, such as shown in FIG. 11B and FIG. 11C. In some aspects, such as shown in FIG. 11B, the second portion of the SL-MGP is contiguous in time with the first portion of the SL-MPG. In other aspects, such as shown in FIG. 11C, the second portion of the SL-MGP is not contiguous in time with the first portion of the SL-MGP. In some aspects, the second portion of the SL-MGP occupies only slots designated for sidelink communication. In other aspects, the second portion of the SL-MGP may occupy slots designated for sidelink communication or slots designated for communications having a lower priority than the sidelink communication.

Process 1200 may include additional implementations, such as any single implementation or any combination of implementations described below and/or in connection with one or more other processes described elsewhere herein. Although FIG. 12 shows example blocks of process 1200, in some implementations, process 1200 may include additional blocks, fewer blocks, different blocks, or differently arranged blocks than those depicted in FIG. 12. Additionally, or alternatively, two or more of the blocks of process 1200 may be performed in parallel.

FIG. 13 is a flowchart of an example process 1300 associated with sidelink measurement and processing gaps for positioning, according to aspects of the disclosure. In some implementations, one or more process blocks of FIG. 13 may be performed by a network entity (NE) (e.g., base station 102, location server 172). In some implementations, one or more process blocks of FIG. 13 may be performed by another device or a group of devices separate from or including the NE. Additionally, or alternatively, one or more process blocks of FIG. 13 may be performed by one or more components of base station 304 or network entity 306, such as processor(s) 384 or processor(s) 394, memory 386 or memory 396, network transceiver(s) 380 or network transceiver(s) 390, and sidelink manager(s) 388 or sidelink manager(s) 398, any or all of which may be means for performing the operations of process 1300.

As shown in FIG. 13, at block 1310, process 1300 may include receiving, from a user equipment (UE), first information indicating SL-PRS processing capability of the UE. Means for performing the operation of block 1310 may include the processor(s) 384 or 394, memory 386 or 396, or WWAN transceiver 350 or network transceiver(s) 390 of the base station 304 or network entity 306, respectively. For example, the base station 304 or NE 306 may receive, from a user equipment (UE), first information indicating SL-PRS processing capability of the UE, using WWAN transceiver 350 or network transceiver 390, respectively.

As further shown in FIG. 13, at block 1320, process 1300 may include determining a sidelink measurement gap for positioning (SL-MGP) based at least in part on the first information. Means for performing the operation of block 1320 may include the processor(s) 384 or 394, memory 386 or 396, or network transceiver(s)380 or 390 of the base station 204 or network entity 306, respectively. For example, the base station 304 may determine a sidelink measurement gap for positioning (SL-MGP) based at least in part on the first information, using the processor(s) 384. In some aspects, the first information comprises at least one of an indication that the UE can or cannot process SL-PRS, an indication of a maximum number of SL-PRS signals that the UE can process simultaneously, an indication of a maximum number of SL-PRS signals that the UE can process per a unit of time, or an indication that the UE can or cannot process SL-PRS signals and non-SL-PRS signals simultaneously.

In some aspects, determining the SL-MGP comprises determining a duration of time for the SL-MGP. In some aspects, determining the duration of time for the SL-MGP comprises setting the duration of time for the SL-MGP to be a sum of one or more of a first duration of time for retuning an RF transceiver of the UE to a bandwidth occupied by a first resource pool for positioning that contains the at least one SL-PRS, a second duration of time for the UE to transmit or receive SL-PRS signal transmissions, or a third duration of time for the UE to process the SL-PRS signal transmissions. In some aspects, determining the SL-MGP comprises determining the SL-MGP based on information received from a plurality of UEs.

As further shown in FIG. 13, at block 1330, process 1300 may include sending, to the UE, second information indicating the SL-MGP. In some aspects, the second information may be part of configuration information or assistance data sent from the base station or location server to the UE. Means for performing the operation of block 1330 may include the processor(s) 384 or 394, memory 386 or 396, or network transceiver(s) 380 or 390 of the base station 304 or the network entity 306, respectively. For example, the base station 304 may send, to the UE, second information indicating the SL-MGP, using transmitter(s) 354.

Process 1300 may include additional implementations, such as any single implementation or any combination of implementations described below and/or in connection with one or more other processes described elsewhere herein. Although FIG. 13 shows example blocks of process 1300, in some implementations, process 1300 may include additional blocks, fewer blocks, different blocks, or differently arranged blocks than those depicted in FIG. 13. Additionally, or alternatively, two or more of the blocks of process 1300 may be performed in parallel.

As will be appreciated, a technical advantage of method 1200 and method 1300 may be that the use of SL-MGPs provide a UE with a window in which a UE can perform SL positioning and have time to process SL-PRS measurements (and optionally retune its RF transceiver, if needed) without having to also process other DL signals and/or transmit other UL signals. Where the SL-MGP is controlled by the network, the UE can report to the network the UE's capabilities for sidelink positioning, such as its capabilities for processing SL-PRSs, etc., which the network can consider when configuring the SL-MGP. Where the SL-MGP is controlled by the UE, the UE may share its capabilities with other UEs involved in sidelink communications, so that they may collectively determine an optical SL-MGP and cluster their individual SL-PRSs within that SL-MGP.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an electrical insulator and an electrical conductor). Furthermore, it is also intended that aspects of a clause can be included in any other independent clause, even if the clause is not directly dependent on the independent clause.

Implementation examples are described in the following numbered clauses:
Clause 1. A method of wireless positioning performed by a user equipment (UE), the method comprising: determining a sidelink measurement gap for positioning (SL-MGP); and performing sidelink positioning during the SL-MGP using at least one sidelink positioning reference signal (SL-PRS).
Clause 2. The method of clause 1, wherein determining the SL-MGP comprises receiving the SL-MGP from a base station or a location server.
Clause 3. The method of any of clauses 1 to 2, wherein determining the SL-MGP comprises determining the SL-MGP based on first information indicating SL-PRS processing capability of the UE.
Clause 4. The method of clause 3, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 5. The method of any of clauses 3 to 4, wherein determining the SL-MGP comprises sending the first information to a base station or a location server and receiving the SL-MGP from the base station or the location server.
Clause 6. The method of any of clauses 1 to 5, wherein determining the SL-MGP comprises determining a duration of time for the SL-MGP.
Clause 7. The method of clause 6, wherein determining the duration of time for the SL-MGP comprises setting the duration of time for the SL-MGP to be a sum of one or more of: a first duration of time for retuning a transceiver of the UE to a bandwidth occupied by a first resource pool for positioning that contains the at least one SL-PRS; a second duration of time for SL-PRS signal transmissions; or a third duration of time for processing the SL-PRS signal transmissions.
Clause 8. The method of any of clauses 1 to 7, wherein determining the SL-MGP comprises coordinating with at least one other UE engaged in sidelink communication to cluster SL-PRS transmissions and to define an SL-MGP that includes the clustered SL-PRS transmissions.
Clause 9. The method of any of clauses 1 to 8, wherein performing sidelink positioning during the SL-MGP using at least one SL-PRS comprises at least one of transmitting an SL-PRS or receiving an SL-PRS.
Clause 10. The method of any of clauses 1 to 9, wherein performing sidelink positioning during the SL-MGP using at least one SL-PRS comprises, during the SL-MGP: retuning a transceiver of the UE from a first bandwidth occupied by a resource pool for data communication to a second bandwidth occupied by a resource pool for positioning; performing sidelink positioning within the second bandwidth; and retuning the transceiver of the UE back to the first bandwidth.
Clause 11. The method of clause 10, wherein the SL-MGP occupies a portion of a time domain that is contained within the resource pool for positioning.
Clause 12. The method of any of clauses 10 to 11, wherein a first portion of the SL-MGP occupies a portion of a time domain within the resource pool for positioning and a second portion of the SL-MGP occupies a portion of the time domain that is not within the resource pool for positioning.
Clause 13. The method of clause 12, wherein the second portion of the SL-MGP is contiguous in time with the first portion of the SL-MGP.
Clause 14. The method of any of clauses 12 to 13, wherein the second portion of the SL-MGP is not contiguous in time with the first portion of the SL-MGP.
Clause 15. The method of clause 14, wherein the second portion of the SL-MGP occupies slots designated for sidelink communication.
Clause 16. The method of any of clauses 14 to 15, wherein the second portion of the SL-MGP occupies slots designated for sidelink communication or for communications having a lower priority than sidelink communication.
Clause 17. A method of wireless positioning performed by a network entity, the method comprising: receiving, from a user equipment (UE), first information indicating sidelink positioning reference signal (SL-PRS) processing capability of the UE; determining a sidelink measurement gap for positioning (SL-MGP) based at least in part on the first information; and sending, to the UE, second information indicating the SL-MGP.
Clause 18. The method of clause 17, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 19. The method of any of clauses 17 to 18, wherein determining the SL-MGP comprises determining a duration of time for the SL-MGP.
Clause 20. The method of clause 19, wherein determining the duration of time for the SL-MGP comprises setting the duration of time for the SL-MGP to be a sum of one or more of: a first duration of time for retuning a transceiver of the UE to a bandwidth occupied by a first resource pool for positioning that contains at least one SL-PRS; a second duration of time for the UE to at least one of transmit or receive SL-PRS signal transmissions; or a third duration of time for the UE to process the SL-PRS signal transmissions.
Clause 21. The method of any of clauses 17 to 20, wherein determining the SL-MGP comprises determining the SL-MGP based on information received from a plurality of UEs.
Clause 22. The method of any of clauses 17 to 21, wherein sending, to the UE, the second information indicating the SL-MGP comprises sending the second information as part of configuration information or assistance data sent from a base station or a location server to the UE.
Clause 23. The method of any of clauses 17 to 22, wherein the network entity comprises a base station or a location server.
Clause 24. A user equipment (UE), comprising: a memory; at least one transceiver; and at least one processor communicatively coupled to the memory and the at least one transceiver, the at least one processor configured to: determine a sidelink measurement gap for positioning (SL-MGP); and perform sidelink positioning during the SL-MGP using at least one sidelink positioning reference signal (SL-PRS).
Clause 25. The UE of clause 24, wherein, to determine the SL-MGP, the at least one processor is configured to receive the SL-MGP from a base station or a location server.
Clause 26. The UE of any of clauses 24 to 25, wherein, to determine the SL-MGP, the at least one processor is configured to determine the SL-MGP based on first information indicating SL-PRS processing capability of the UE.
Clause 27. The UE of clause 26, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 28. The UE of any of clauses 26 to 27, wherein, to determine the SL-MGP, the at least one processor is configured to send the first information to a base station or a location server and receive the SL-MGP from the base station or the location server.
Clause 29. The UE of any of clauses 24 to 28, wherein, to determine the SL-MGP, the at least one processor is configured to determine a duration of time for the SL-MGP.
Clause 30. The UE of clause 29, wherein, to determine the duration of time for the SL-MGP, the at least one processor is configured to set the duration of time for the SL-MGP to be a sum of one or more of: a first duration of time for retuning a transceiver of the UE to a bandwidth occupied by a first resource pool for positioning that contains the at least one SL-PRS; a second duration of time for SL-PRS signal transmissions; or a third duration of time for processing the SL-PRS signal transmissions.
Clause 31. The UE of any of clauses 24 to 30, wherein, to determine the SL-MGP, the at least one processor is configured to coordinate with at least one other UE engaged in sidelink communication to cluster SL-PRS transmissions and to define an SL-MGP that includes the clustered SL-PRS transmissions.
Clause 32. The UE of any of clauses 24 to 31, wherein, to perform sidelink positioning during the SL-MGP using at least one SL-PRS, the at least one processor is configured to transmit an SL-PRS or receive an SL-PRS.
Clause 33. The UE of any of clauses 24 to 32, wherein, to perform sidelink positioning during the SL-MGP using at least one SL-PRS, the at least one processor is configured to, during the SL-MGP: retune a transceiver of the UE from a first bandwidth occupied by a resource pool for data communication to a second bandwidth occupied by a resource pool for positioning; perform sidelink positioning within the second bandwidth; and retune the transceiver of the UE back to the first bandwidth.
Clause 34. The UE of clause 33, wherein the SL-MGP occupies a portion of a time domain that is contained within the resource pool for positioning.
Clause 35. The UE of any of clauses 33 to 34, wherein a first portion of the SL-MGP occupies a portion of a time domain within the resource pool for positioning and a second portion of the SL-MGP occupies a portion of the time domain that is not within the resource pool for positioning.
Clause 36. The UE of clause 35, wherein the second portion of the SL-MGP is contiguous in time with the first portion of the SL-MGP.
Clause 37. The UE of any of clauses 35 to 36, wherein the second portion of the SL-MGP is not contiguous in time with the first portion of the SL-MGP.
Clause 38. The UE of clause 37, wherein the second portion of the SL-MGP occupies slots designated for sidelink communication.
Clause 39. The UE of any of clauses 37 to 38, wherein the second portion of the SL-MGP occupies slots designated for sidelink communication or for communications having a lower priority than sidelink communication.
Clause 40. A network entity, comprising: a memory; at least one transceiver; and at least one processor communicatively coupled to the memory and the at least one transceiver, the at least one processor configured to: receive, from a user equipment (UE) via the at least one transceiver, first information indicating sidelink positioning reference signal (SL-PRS) processing capability of the UE; determine a sidelink measurement gap for positioning (SL-MGP) based at least in part on the first information; and send, to the UE via the at least one transceiver, second information indicating the SL-MGP.
Clause 41. The network entity of clause 40, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 42. The network entity of any of clauses 40 to 41, wherein, to determine the SL-MGP, the at least one processor is configured to determine a duration of time for the SL-MGP.
Clause 43. The network entity of clause 42, wherein, to determine the duration of time for the SL-MGP, the at least one processor is configured to set the duration of time for the SL-MGP to be a sum of one or more of: a first duration of time for retuning a transceiver of the UE to a bandwidth occupied by a first resource pool for positioning that contains at least one SL-PRS; a second duration of time for the UE to at least one of transmit or receive SL-PRS signal transmissions; or a third duration of time for the UE to process the SL-PRS signal transmissions.
Clause 44. The network entity of any of clauses 40 to 43, wherein, to determine the SL-MGP, the at least one processor is configured to determine the SL-MGP based on information received from a plurality of UEs.
Clause 45. The network entity of any of clauses 40 to 44, wherein, to send, to the UE, the second information indicating the SL-MGP, the at least one processor is configured to send the second information as part of configuration information or assistance data sent from a base station or a location server to the UE.
Clause 46. The network entity of any of clauses 40 to 45, wherein the network entity comprises a base station or a location server.
Clause 47. A user equipment (UE), comprising: means for determining a sidelink measurement gap for positioning (SL-MGP); and means for performing sidelink positioning during the SL-MGP using at least one sidelink positioning reference signal (SL-PRS).
Clause 48. The UE of clause 47, wherein the means for determining the SL-MGP comprises means for receiving the SL-MGP from a base station or a location server.
Clause 49. The UE of any of clauses 47 to 48, wherein the means for determining the SL-MGP comprises means for determining the SL-MGP based on first information indicating SL-PRS processing capability of the UE.
Clause 50. The UE of clause 49, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 51. The UE of any of clauses 49 to 50, wherein the means for determining the SL-MGP comprises means for sending the first information to a base station or a location server and receiving the SL-MGP from the base station or the location server.
Clause 52. The UE of any of clauses 47 to 51, wherein the means for determining the SL-MGP comprises means for determining a duration of time for the SL-MGP.
Clause 53. The UE of clause 52, wherein the means for determining the duration of time for the SL-MGP comprises means for setting the duration of time for the SL-MGP to be a sum of one or more of: a first duration of time for retuning a transceiver of the UE to a bandwidth occupied by a first resource pool for positioning that contains the at least one SL-PRS; a second duration of time for SL-PRS signal transmissions; or a third duration of time for processing the SL-PRS signal transmissions.
Clause 54. The UE of any of clauses 47 to 53, wherein the means for determining the SL-MGP comprises means for coordinating with at least one other UE engaged in sidelink communication to cluster SL-PRS transmissions and to define an SL-MGP that includes the clustered SL-PRS transmissions.
Clause 55. The UE of any of clauses 47 to 54, wherein the means for performing sidelink positioning during the SL-MGP using at least one SL-PRS comprises at least one of means for transmitting an SL-PRS or receiving an SL-PRS.
Clause 56. The UE of any of clauses 47 to 55, wherein the means for performing sidelink positioning during the SL-MGP using at least one SL-PRS comprises means for during the SL-MGP: means for retuning a transceiver of the UE from a first bandwidth occupied by a resource pool for data communication to a second bandwidth occupied by a resource pool for positioning; means for performing sidelink positioning within the second bandwidth; and means for retuning the transceiver of the UE back to the first bandwidth.
Clause 57. The UE of clause 56, wherein the SL-MGP occupies a portion of a time domain that is contained within the resource pool for positioning.
Clause 58. The UE of any of clauses 56 to 57, wherein a first portion of the SL-MGP occupies a portion of a time domain within the resource pool for positioning and a second portion of the SL-MGP occupies a portion of the time domain that is not within the resource pool for positioning.
Clause 59. The UE of clause 58, wherein the second portion of the SL-MGP is contiguous in time with the first portion of the SL-MGP.
Clause 60. The UE of any of clauses 58 to 59, wherein the second portion of the SL-MGP is not contiguous in time with the first portion of the SL-MGP.
Clause 61. The UE of clause 60, wherein the second portion of the SL-MGP occupies slots designated for sidelink communication.
Clause 62. The UE of any of clauses 60 to 61, wherein the second portion of the SL-MGP occupies slots designated for sidelink communication or for communications having a lower priority than sidelink communication.
Clause 63. A network entity, comprising: means for receiving, from a user equipment (UE), first information indicating sidelink positioning reference signal (SL-PRS) processing capability of the UE; means for determining a sidelink measurement gap for positioning (SL-MGP) based at least in part on the first information; and means for sending, to the UE, second information indicating the SL-MGP.
Clause 64. The network entity of clause 63, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 65. The network entity of any of clauses 63 to 64, wherein the means for determining the SL-MGP comprises means for determining a duration of time for the SL-MGP.
Clause 66. The network entity of clause 65, wherein the means for determining the duration of time for the SL-MGP comprises means for setting the duration of time for the SL-MGP to be a sum of one or more of: a first duration of time for retuning a transceiver of the UE to a bandwidth occupied by a first resource pool for positioning that contains at least one SL-PRS; a second duration of time for the UE to at least one of transmit or receive SL-PRS signal transmissions; or a third duration of time for the UE to process the SL-PRS signal transmissions.
Clause 67. The network entity of any of clauses 63 to 66, wherein the means for determining the SL-MGP comprises means for determining the SL-MGP based on information received from a plurality of UEs.
Clause 68. The network entity of any of clauses 63 to 67, wherein the means for sending, to the UE, the second information indicating the SL-MGP comprises means for sending the second information as part of configuration information or assistance data sent from a base station or a location server to the UE.
Clause 69. The network entity of any of clauses 63 to 68, wherein the network entity comprises a base station or a location server.
Clause 70. A non-transitory computer-readable medium storing computer-executable instructions that, when executed by a user equipment (UE), cause the UE to: determine a sidelink measurement gap for positioning (SL-MGP); and perform sidelink positioning during the SL-MGP using at least one sidelink positioning reference signal (SL-PRS).
Clause 71. The non-transitory computer-readable medium of clause 70, wherein the computer-executable instructions that, when executed by the UE, cause the UE to determine the SL-MGP comprise computer-executable instructions that, when executed by the UE, cause the UE to receive the SL-MGP from a base station or a location server.
Clause 72. The non-transitory computer-readable medium of any of clauses 70 to 71, wherein the computer-executable instructions that, when executed by the UE, cause the UE to determine the SL-MGP comprise computer-executable instructions that, when executed by the UE, cause the UE to determine the SL-MGP based on first information indicating SL-PRS processing capability of the UE.
Clause 73. The non-transitory computer-readable medium of clause 72, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 74. The non-transitory computer-readable medium of any of clauses 72 to 73, wherein the computer-executable instructions that, when executed by the UE, cause the UE to determine the SL-MGP comprise computer-executable instructions that, when executed by the UE, cause the UE to send the first information to a base station or a location server and receive the SL-MGP from the base station or the location server.
Clause 75. The non-transitory computer-readable medium of any of clauses 70 to 74, wherein the computer-executable instructions that, when executed by the UE, cause the UE to determine the SL-MGP comprise computer-executable instructions that, when executed by the UE, cause the UE to determine a duration of time for the SL-MGP.
Clause 76. The non-transitory computer-readable medium of clause 75, wherein the computer-executable instructions that, when executed by the UE, cause the UE to determine the duration of time for the SL-MGP comprise computer-executable instructions that, when executed by the UE, cause the UE to set the duration of time for the SL-MGP to be a sum of one or more of: a first duration of time for retuning a transceiver of the UE to a bandwidth occupied by a first resource pool for positioning that contains the at least one SL-PRS; a second duration of time for SL-PRS signal transmissions; or a third duration of time for processing the SL-PRS signal transmissions.
Clause 77. The non-transitory computer-readable medium of any of clauses 70 to 76, wherein the computer-executable instructions that, when executed by the UE, cause the UE to determine the SL-MGP comprise computer-executable instructions that, when executed by the UE, cause the UE to coordinate with at least one other UE engaged in sidelink communication to cluster SL-PRS transmissions and to define an SL-MGP that includes the clustered SL-PRS transmissions.
Clause 78. The non-transitory computer-readable medium of any of clauses 70 to 77, wherein the computer-executable instructions that, when executed by the UE, cause the UE to perform sidelink positioning during the SL-MGP using at least one SL-PRS comprise computer-executable instructions that, when executed by the UE, cause the UE to transmit an SL-PRS or receive an SL-PRS.
Clause 79. The non-transitory computer-readable medium of any of clauses 70 to 78, wherein the computer-executable instructions that, when executed by the UE, cause the UE to perform sidelink positioning during the SL-MGP using at least one SL-PRS comprise computer-executable instructions that, when executed by the UE, cause the UE to during the SL-MGP: retune a transceiver of the UE from a first bandwidth occupied by a resource pool for data communication to a second bandwidth occupied by a resource pool for positioning; perform sidelink positioning within the second bandwidth; and retune the transceiver of the UE back to the first bandwidth.
Clause 80. The non-transitory computer-readable medium of clause 79, wherein the SL-MGP occupies a portion of a time domain that is contained within the resource pool for positioning.
Clause 81. The non-transitory computer-readable medium of any of clauses 79 to 80, wherein a first portion of the SL-MGP occupies a portion of a time domain within the resource pool for positioning and a second portion of the SL-MGP occupies a portion of the time domain that is not within the resource pool for positioning.
Clause 82. The non-transitory computer-readable medium of clause 81, wherein the second portion of the SL-MGP is contiguous in time with the first portion of the SL-MGP.
Clause 83. The non-transitory computer-readable medium of any of clauses 81 to 82, wherein the second portion of the SL-MGP is not contiguous in time with the first portion of the SL-MGP.
Clause 84. The non-transitory computer-readable medium of clause 83, wherein the second portion of the SL-MGP occupies slots designated for sidelink communication.
Clause 85. The non-transitory computer-readable medium of any of clauses 83 to 84, wherein the second portion of the SL-MGP occupies slots designated for sidelink communication or for communications having a lower priority than sidelink communication.
Clause 86. A non-transitory computer-readable medium storing computer-executable instructions that, when executed by a network entity, cause the network entity to: receive, from a user equipment (UE), first information indicating sidelink positioning reference signal (SL-PRS) processing capability of the UE; determine a sidelink measurement gap for positioning (SL-MGP) based at least in part on the first information; and send, to the UE, second information indicating the SL-MGP.
Clause 87. The non-transitory computer-readable medium of clause 86, wherein the first information comprises at least one of: an indication that the UE can or cannot process SL-PRS; an indication of a maximum number of SL-PRS signals that the UE can process simultaneously; an indication of a maximum number of SL-PRS signals that the UE can process per a unit of time; or an indication that the UE can or cannot process SL-PRS signals and non-SL-PRS signals simultaneously.
Clause 88. The non-transitory computer-readable medium of any of clauses 86 to 87, wherein the computer-executable instructions that, when executed by the network entity, cause the network entity to determine the SL-MGP comprise computer-executable instructions that, when executed by the network entity, cause the network entity to determine a duration of time for the SL-MGP.
Clause 89. The non-transitory computer-readable medium of clause 88, wherein the computer-executable instructions that, when executed by the network entity, cause the network entity to determine the duration of time for the SL-MGP comprise computer-executable instructions that, when executed by the network entity, cause the network entity to set the duration of time for the SL-MGP to be a sum of one or more of: a first duration of time for retuning a transceiver of the UE to a bandwidth occupied by a first resource pool for positioning that contains at least one SL-PRS; a second duration of time for the UE to at least one of transmit or receive SL-PRS signal transmissions; or a third duration of time for the UE to process the SL-PRS signal transmissions.
Clause 90. The non-transitory computer-readable medium of any of clauses 86 to 89, wherein the computer-executable instructions that, when executed by the network entity, cause the network entity to determine the SL-MGP comprise computer-executable instructions that, when executed by the network entity, cause the network entity to determine the SL-MGP based on information received from a plurality of UEs.
Clause 91. The non-transitory computer-readable medium of any of clauses 86 to 90, wherein the computer-executable instructions that, when executed by the network entity, cause the network entity to send, to the UE, the second information indicating the SL-MGP comprise computer-executable instructions that, when executed by the network entity, cause the network entity to send the second information as part of configuration information or assistance data sent from a base station or a location server to the UE.
Clause 92. The non-transitory computer-readable medium of any of clauses 86 to 91, wherein the network entity comprises a base station or a location server.
Clause 93. An apparatus comprising a memory, a transceiver, and a processor communicatively coupled to the memory and the transceiver, the memory, the transceiver, and the processor configured to perform a method according to any of clauses 1 to 23.
Clause 94. An apparatus comprising means for performing a method according to any of clauses 1 to 23.
Clause 95. A non-transitory computer-readable medium storing computer-executable instructions, the computer-executable comprising at least one instruction for causing a computer or processor to perform a method according to any of clauses 1 to 23.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

Embodiments of the invention can be described with reference to the following numbered clauses, with preferred features laid out in the dependent clauses:
1. A method of wireless positioning performed by a user equipment (UE), the method comprising:
   determining a sidelink measurement gap for positioning (SL-MGP); and
   performing sidelink positioning during the SL-MGP using at least one sidelink positioning reference signal (SL-PRS).
2. The method of clause 1, wherein determining the SL-MGP comprises receiving the SL-MGP from a base station or a location server.
3. The method of clause 1, wherein determining the SL-MGP comprises determining the SL-MGP based on first information indicating SL-PRS processing capability of the UE.
4. The method of clause 3, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
5. The method of clause 3, wherein determining the SL-MGP comprises sending the first information to a base station or a location server and receiving the SL-MGP from the base station or the location server.
6. The method of clause 1, wherein determining the SL-MGP comprises determining a duration of time for the SL-MGP.
7. The method of clause 6, wherein determining the duration of time for the SL-MGP comprises setting the duration of time for the SL-MGP to be a sum of one or more of:
   a first duration of time for retuning a transceiver of the UE to a bandwidth occupied by a first resource pool for positioning that contains the at least one SL-PRS;
   a second duration of time for SL-PRS signal transmissions; or
   a third duration of time for processing the SL-PRS signal transmissions.
8. The method of clause 1, wherein determining the SL-MGP comprises coordinating with at least one other UE engaged in sidelink communication to cluster SL-PRS transmissions and to define an SL-MGP that includes the clustered SL-PRS transmissions.
9. The method of clause 1, wherein performing sidelink positioning during the SL-MGP using at least one SL-PRS comprises at least one of transmitting an SL-PRS or receiving an SL-PRS.
10. The method of clause 1, wherein performing sidelink positioning during the SL-MGP using at least one SL-PRS comprises, during the SL-MGP:
   retuning a transceiver of the UE from a first bandwidth occupied by a resource pool for data communication to a second bandwidth occupied by a resource pool for positioning;
   performing sidelink positioning within the second bandwidth; and
   retuning the transceiver of the UE back to the first bandwidth.
11. The method of clause 10, wherein the SL-MGP occupies a portion of a time domain that is contained within the resource pool for positioning.
12. The method of clause 10, wherein a first portion of the SL-MGP occupies a portion of a time domain within the resource pool for positioning and a second portion of the SL-MGP occupies a portion of the time domain that is not within the resource pool for positioning.
13. The method of clause 12, wherein the second portion of the SL-MGP is contiguous in time with the first portion of the SL-MGP.
14. The method of clause 12, wherein the second portion of the SL-MGP is not contiguous in time with the first portion of the SL-MGP.
15. The method of clause 14, wherein the second portion of the SL-MGP occupies slots designated for sidelink communication.
16. The method of clause 14, wherein the second portion of the SL-MGP occupies slots designated for sidelink communication or for communications having a lower priority than sidelink communication.
17. A method of wireless positioning performed by a network entity, the method comprising:
   receiving, from a user equipment (UE), first information indicating sidelink positioning reference signal (SL-PRS) processing capability of the UE;
   determining a sidelink measurement gap for positioning (SL-MGP) based at least in part on the first information; and
   sending, to the UE, second information indicating the SL-MGP.
18. The method of clause 17, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
19. The method of clause 17, wherein determining the SL-MGP comprises determining a duration of time for the SL-MGP.
20. The method of clause 19, wherein determining the duration of time for the SL-MGP comprises setting the duration of time for the SL-MGP to be a sum of one or more of:
   a first duration of time for retuning a transceiver of the UE to a bandwidth occupied by a first resource pool for positioning that contains at least one SL-PRS;
   a second duration of time for the UE to at least one of transmit or receive SL-PRS signal transmissions; or
   a third duration of time for the UE to process the SL-PRS signal transmissions.
21. The method of clause 17, wherein determining the SL-MGP comprises determining the SL-MGP based on information received from a plurality of UEs.
22. The method of clause 17, wherein sending, to the UE, the second information indicating the SL-MGP comprises sending the second information as part of configuration information or assistance data sent from a base station or a location server to the UE.
23. The method of clause 17, wherein the network entity comprises a base station or a location server.
24. A user equipment (UE), comprising:
   a memory;
   at least one transceiver; and
   at least one processor communicatively coupled to the memory and the at least one transceiver, the at least one processor configured to:
      determine a sidelink measurement gap for positioning (SL-MGP); and
      perform sidelink positioning during the SL-MGP using at least one sidelink positioning reference signal (SL-PRS).
25. The UE of clause 24, wherein, to determine the SL-MGP, the at least one processor is configured to receive the SL-MGP from a base station or a location server.
26. The UE of clause 24, wherein, to determine the SL-MGP, the at least one processor is configured to determine the SL-MGP based on first information indicating SL-PRS processing capability of the UE.
27. The UE of clause 26, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
28. The UE of clause 26, wherein, to determine the SL-MGP, the at least one processor is configured to send the first information to a base station or a location server and receive the SL-MGP from the base station or the location server.
29. The UE of clause 24, wherein, to determine the SL-MGP, the at least one processor is configured to determine a duration of time for the SL-MGP.
30. The UE of clause 29, wherein, to determine the duration of time for the SL-MGP, the at least one processor is configured to set the duration of time for the SL-MGP to be a sum of one or more of:
   a first duration of time for retuning a transceiver of the UE to a bandwidth occupied by a first resource pool for positioning that contains the at least one SL-PRS;
   a second duration of time for SL-PRS signal transmissions; or
   a third duration of time for processing the SL-PRS signal transmissions.
31. The UE of clause 24, wherein, to determine the SL-MGP, the at least one processor is configured to coordinate with at least one other UE engaged in sidelink communication to cluster SL-PRS transmissions and to define an SL-MGP that includes the clustered SL-PRS transmissions.
32. The UE of clause 24, wherein, to perform sidelink positioning during the SL-MGP using at least one SL-PRS, the at least one processor is configured to transmit an SL-PRS or receive an SL-PRS.
33. The UE of clause 24, wherein, to perform sidelink positioning during the SL-MGP using at least one SL-PRS, the at least one processor is configured to, during the SL-MGP:
   retune a transceiver of the UE from a first bandwidth occupied by a resource pool for data communication to a second bandwidth occupied by a resource pool for positioning;
   perform sidelink positioning within the second bandwidth; and
   retune the transceiver of the UE back to the first bandwidth.
34. The UE of clause 33, wherein the SL-MGP occupies a portion of a time domain that is contained within the resource pool for positioning.
35. The UE of clause 33, wherein a first portion of the SL-MGP occupies a portion of a time domain within the resource pool for positioning and a second portion of the SL-MGP occupies a portion of the time domain that is not within the resource pool for positioning.
36. The UE of clause 35, wherein the second portion of the SL-MGP is contiguous in time with the first portion of the SL-MGP.
37. The UE of clause 35, wherein the second portion of the SL-MGP is not contiguous in time with the first portion of the SL-MGP.
38. The UE of clause 37, wherein the second portion of the SL-MGP occupies slots designated for sidelink communication.
39. The UE of clause 37, wherein the second portion of the SL-MGP occupies slots designated for sidelink communication or for communications having a lower priority than sidelink communication.
40. A network entity, comprising:
   a memory;
   at least one transceiver; and
   at least one processor communicatively coupled to the memory and the at least one transceiver, the at least one processor configured to:
      receive, from a user equipment (UE) via the at least one transceiver, first information indicating sidelink positioning reference signal (SL-PRS) processing capability of the UE;
      determine a sidelink measurement gap for positioning (SL-MGP) based at least in part on the first information; and
      send, to the UE via the at least one transceiver, second information indicating the SL-MGP.
41. The network entity of clause 40, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
42. The network entity of clause 40, wherein, to determine the SL-MGP, the at least one processor is configured to determine a duration of time for the SL-MGP.
43. The network entity of clause 42, wherein, to determine the duration of time for the SL-MGP, the at least one processor is configured to set the duration of time for the SL-MGP to be a sum of one or more of:
   a first duration of time for retuning a transceiver of the UE to a bandwidth occupied by a first resource pool for positioning that contains at least one SL-PRS;
   a second duration of time for the UE to at least one of transmit or receive SL-PRS signal transmissions; or
   a third duration of time for the UE to process the SL-PRS signal transmissions.
44. The network entity of clause 40, wherein, to determine the SL-MGP, the at least one processor is configured to determine the SL-MGP based on information received from a plurality of UEs.
45. The network entity of clause 40, wherein, to send, to the UE, the second information indicating the SL-MGP, the at least one processor is configured to send the second information as part of configuration information or assistance data sent from a base station or a location server to the UE.
46. The network entity of clause 40, wherein the network entity comprises a base station or a location server.
47. A user equipment (UE), comprising:
   means for determining a sidelink measurement gap for positioning (SL-MGP); and
   means for performing sidelink positioning during the SL-MGP using at least one sidelink positioning reference signal (SL-PRS).
48. The UE of clause 47, wherein the means for determining the SL-MGP comprises means for receiving the SL-MGP from a base station or a location server.
49. The UE of clause 47, wherein the means for determining the SL-MGP comprises means for determining the SL-MGP based on first information indicating SL-PRS processing capability of the UE.
50. The UE of clause 49, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
51. The UE of clause 49, wherein the means for determining the SL-MGP comprises means for sending the first information to a base station or a location server and receiving the SL-MGP from the base station or the location server.
52. The UE of clause 47, wherein the means for determining the SL-MGP comprises means for determining a duration of time for the SL-MGP.
53. The UE of clause 52, wherein the means for determining the duration of time for the SL-MGP comprises means for setting the duration of time for the SL-MGP to be a sum of one or more of:
   a first duration of time for retuning a transceiver of the UE to a bandwidth occupied by a first resource pool for positioning that contains the at least one SL-PRS;
   a second duration of time for SL-PRS signal transmissions; or
   a third duration of time for processing the SL-PRS signal transmissions.
54. The UE of clause 47, wherein the means for determining the SL-MGP comprises means for coordinating with at least one other UE engaged in sidelink communication to cluster SL-PRS transmissions and to define an SL-MGP that includes the clustered SL-PRS transmissions.
55. The UE of clause 47, wherein the means for performing sidelink positioning during the SL-MGP using at least one SL-PRS comprises at least one of means for transmitting an SL-PRS or receiving an SL-PRS.
56. The UE of clause 47, wherein the means for performing sidelink positioning during the SL-MGP using at least one SL-PRS comprises means for during the SL-MGP:
   means for retuning a transceiver of the UE from a first bandwidth occupied by a resource pool for data communication to a second bandwidth occupied by a resource pool for positioning;
   means for performing sidelink positioning within the second bandwidth; and
   means for retuning the transceiver of the UE back to the first bandwidth.
57. The UE of clause 56, wherein the SL-MGP occupies a portion of a time domain that is contained within the resource pool for positioning.
58. The UE of clause 56, wherein a first portion of the SL-MGP occupies a portion of a time domain within the resource pool for positioning and a second portion of the SL-MGP occupies a portion of the time domain that is not within the resource pool for positioning.
59. The UE of clause 58, wherein the second portion of the SL-MGP is contiguous in time with the first portion of the SL-MGP.
60. The UE of clause 58, wherein the second portion of the SL-MGP is not contiguous in time with the first portion of the SL-MGP.
61. The UE of clause 60, wherein the second portion of the SL-MGP occupies slots designated for sidelink communication.
62. The UE of clause 60, wherein the second portion of the SL-MGP occupies slots designated for sidelink communication or for communications having a lower priority than sidelink communication.
63. A network entity, comprising:
   means for receiving, from a user equipment (UE), first information indicating sidelink positioning reference signal (SL-PRS) processing capability of the UE;
   means for determining a sidelink measurement gap for positioning (SL-MGP) based at least in part on the first information; and
   means for sending, to the UE, second information indicating the SL-MGP.
64. The network entity of clause 63, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
65. The network entity of clause 63, wherein the means for determining the SL-MGP comprises means for determining a duration of time for the SL-MGP.
66. The network entity of clause 65, wherein the means for determining the duration of time for the SL-MGP comprises means for setting the duration of time for the SL-MGP to be a sum of one or more of:
   a first duration of time for retuning a transceiver of the UE to a bandwidth occupied by a first resource pool for positioning that contains at least one SL-PRS;
   a second duration of time for the UE to at least one of transmit or receive SL-PRS signal transmissions; or
   a third duration of time for the UE to process the SL-PRS signal transmissions.
67. The network entity of clause 63, wherein the means for determining the SL-MGP comprises means for determining the SL-MGP based on information received from a plurality of UEs.
68. The network entity of clause 63, wherein the means for sending, to the UE, the second information indicating the SL-MGP comprises means for sending the second information as part of configuration information or assistance data sent from a base station or a location server to the UE.
69. The network entity of clause 63, wherein the network entity comprises a base station or a location server.
70. A non-transitory computer-readable medium storing computer-executable instructions that, when executed by a user equipment (UE), cause the UE to:
   determine a sidelink measurement gap for positioning (SL-MGP); and
   perform sidelink positioning during the SL-MGP using at least one sidelink positioning reference signal (SL-PRS).
71. The non-transitory computer-readable medium of clause 70, wherein the computer-executable instructions that, when executed by the UE, cause the UE to determine the SL-MGP comprise computer-executable instructions that, when executed by the UE, cause the UE to receive the SL-MGP from a base station or a location server.
72. The non-transitory computer-readable medium of clause 70, wherein the computer-executable instructions that, when executed by the UE, cause the UE to determine the SL-MGP comprise computer-executable instructions that, when executed by the UE, cause the UE to determine the SL-MGP based on first information indicating SL-PRS processing capability of the UE.
73. The non-transitory computer-readable medium of clause 72, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
74. The non-transitory computer-readable medium of clause 72, wherein the computer-executable instructions that, when executed by the UE, cause the UE to determine the SL-MGP comprise computer-executable instructions that, when executed by the UE, cause the UE to send the first information to a base station or a location server and receive the SL-MGP from the base station or the location server.
75. The non-transitory computer-readable medium of clause 70, wherein the computer-executable instructions that, when executed by the UE, cause the UE to determine the SL-MGP comprise computer-executable instructions that, when executed by the UE, cause the UE to determine a duration of time for the SL-MGP.
76. The non-transitory computer-readable medium of clause 75, wherein the computer-executable instructions that, when executed by the UE, cause the UE to determine the duration of time for the SL-MGP comprise computer-executable instructions that, when executed by the UE, cause the UE to set the duration of time for the SL-MGP to be a sum of one or more of:
   a first duration of time for retuning a transceiver of the UE to a bandwidth occupied by a first resource pool for positioning that contains the at least one SL-PRS;
   a second duration of time for SL-PRS signal transmissions; or
   a third duration of time for processing the SL-PRS signal transmissions.
77. The non-transitory computer-readable medium of clause 70, wherein the computer-executable instructions that, when executed by the UE, cause the UE to determine the SL-MGP comprise computer-executable instructions that, when executed by the UE, cause the UE to coordinate with at least one other UE engaged in sidelink communication to cluster SL-PRS transmissions and to define an SL-MGP that includes the clustered SL-PRS transmissions.
78. The non-transitory computer-readable medium of clause 70, wherein the computer-executable instructions that, when executed by the UE, cause the UE to perform sidelink positioning during the SL-MGP using at least one SL-PRS comprise computer-executable instructions that, when executed by the UE, cause the UE to transmit an SL-PRS or receive an SL-PRS.
79. The non-transitory computer-readable medium of clause 70, wherein the computer-executable instructions that, when executed by the UE, cause the UE to perform sidelink positioning during the SL-MGP using at least one SL-PRS comprise computer-executable instructions that, when executed by the UE, cause the UE to during the SL-MGP:
   retune a transceiver of the UE from a first bandwidth occupied by a resource pool for data communication to a second bandwidth occupied by a resource pool for positioning;
   perform sidelink positioning within the second bandwidth; and
   retune the transceiver of the UE back to the first bandwidth.
80. The non-transitory computer-readable medium of clause 79, wherein the SL-MGP occupies a portion of a time domain that is contained within the resource pool for positioning.
81. The non-transitory computer-readable medium of clause 79, wherein a first portion of the SL-MGP occupies a portion of a time domain within the resource pool for positioning and a second portion of the SL-MGP occupies a portion of the time domain that is not within the resource pool for positioning.
82. The non-transitory computer-readable medium of clause 81, wherein the second portion of the SL-MGP is contiguous in time with the first portion of the SL-MGP.
83. The non-transitory computer-readable medium of clause 81, wherein the second portion of the SL-MGP is not contiguous in time with the first portion of the SL-MGP.
84. The non-transitory computer-readable medium of clause 83, wherein the second portion of the SL-MGP occupies slots designated for sidelink communication.
85. The non-transitory computer-readable medium of clause 83, wherein the second portion of the SL-MGP occupies slots designated for sidelink communication or for communications having a lower priority than sidelink communication.
86. A non-transitory computer-readable medium storing computer-executable instructions that, when executed by a network entity, cause the network entity to:
   receive, from a user equipment (UE), first information indicating sidelink positioning reference signal (SL-PRS) processing capability of the UE;
   determine a sidelink measurement gap for positioning (SL-MGP) based at least in part on the first information; and
   send, to the UE, second information indicating the SL-MGP.
87. The non-transitory computer-readable medium of clause 86, wherein the first information comprises at least one of:
   an indication that the UE can or cannot process SL-PRS;
   an indication of a maximum number of SL-PRS signals that the UE can process simultaneously;
   an indication of a maximum number of SL-PRS signals that the UE can process per a unit of time; or
   an indication that the UE can or cannot process SL-PRS signals and non-SL-PRS signals simultaneously.
88. The non-transitory computer-readable medium of clause 86, wherein the computer-executable instructions that, when executed by the network entity, cause the network entity to determine the SL-MGP comprise computer-executable instructions that, when executed by the network entity, cause the network entity to determine a duration of time for the SL-MGP.
89. The non-transitory computer-readable medium of clause 88, wherein the computer-executable instructions that, when executed by the network entity, cause the network entity to determine the duration of time for the SL-MGP comprise computer-executable instructions that, when executed by the network entity, cause the network entity to set the duration of time for the SL-MGP to be a sum of one or more of:
   a first duration of time for retuning a transceiver of the UE to a bandwidth occupied by a first resource pool for positioning that contains at least one SL-PRS;
   a second duration of time for the UE to at least one of transmit or receive SL-PRS signal transmissions; or
   a third duration of time for the UE to process the SL-PRS signal transmissions.
90. The non-transitory computer-readable medium of clause 86, wherein the computer-executable instructions that, when executed by the network entity, cause the network entity to determine the SL-MGP comprise computer-executable instructions that, when executed by the network entity, cause the network entity to determine the SL-MGP based on information received from a plurality of UEs.
91. The non-transitory computer-readable medium of clause 86, wherein the computer-executable instructions that, when executed by the network entity, cause the network entity to send, to the UE, the second information indicating the SL-MGP comprise computer-executable instructions that, when executed by the network entity, cause the network entity to send the second information as part of configuration information or assistance data sent from a base station or a location server to the UE.
92. The non-transitory computer-readable medium of clause 86, wherein the network entity comprises a base station or a location server.

## Claims

1. A method of wireless positioning performed by a user equipment (UE), the method comprising:
determining a sidelink measurement gap for positioning (SL-MGP); and
performing sidelink positioning during the SL-MGP using at least one sidelink positioning reference signal (SL-PRS);
wherein performing sidelink positioning during the SL-MGP using at least one SL-PRS comprises, during the SL-MGP:
retuning a transceiver of the UE from a first bandwidth occupied by a resource pool for data communication to a second bandwidth occupied by a resource pool for positioning;
performing sidelink positioning within the second bandwidth; and
retuning the transceiver of the UE back to the first bandwidth;
wherein the SL-MGP occupies a portion of a time domain that is contained within the resource pool for positioning.

2. The method of claim 1, wherein a first portion of the SL-MGP occupies a portion of a time domain within the resource pool for positioning and a second portion of the SL-MGP occupies a portion of the time domain that is not within the resource pool for positioning.

3. The method of claim 2, wherein the second portion of the SL-MGP is contiguous in time with the first portion of the SL-MGP.

4. The method of claim 2, wherein the second portion of the SL-MGP is not contiguous in time with the first portion of the SL-MGP.

5. The method of claim 4, wherein the second portion of the SL-MGP occupies slots designated for sidelink communication.

6. The method of claim 4, wherein the second portion of the SL-MGP occupies slots designated for sidelink communication or for communications having a lower priority than sidelink communication.

7. A user equipment (UE), comprising:
a memory;
at least one transceiver; and
at least one processor communicatively coupled to the memory and the at least one transceiver, the at least one processor configured to:
determine a sidelink measurement gap for positioning (SL-MGP); and
perform sidelink positioning during the SL-MGP using at least one
sidelink positioning reference signal (SL-PRS);
wherein, to perform sidelink positioning during the SL-MGP using at least one SL-PRS, the at least one processor is configured to, during the SL-MGP:
retune a transceiver of the UE from a first bandwidth occupied by a resource pool for data communication to a second bandwidth occupied by a resource pool for positioning;
perform sidelink positioning within the second bandwidth; and
retune the transceiver of the UE back to the first bandwidth;
wherein the SL-MGP occupies a portion of a time domain that is contained within the resource pool for positioning.

8. The UE of claim 7, wherein a first portion of the SL-MGP occupies a portion of a time domain within the resource pool for positioning and a second portion of the SL-MGP occupies a portion of the time domain that is not within the resource pool for positioning.

9. The UE of claim 7, wherein the second portion of the SL-MGP is contiguous in time with the first portion of the SL-MGP.

10. The UE of claim 7, wherein the second portion of the SL-MGP is not contiguous in time with the first portion of the SL-MGP.

11. The UE of claim 7, wherein the second portion of the SL-MGP occupies slots designated for sidelink communication.

12. The UE of claim 7, wherein the second portion of the SL-MGP occupies slots designated for sidelink communication or for communications having a lower priority than sidelink communication.

13. A non-transitory computer-readable medium storing computer-executable instructions that, when executed by a user equipment (UE), cause the UE to undertake the method of any of claims 1 to 6
